# EUROPEAN PATENT SPECIFICATION

(11) **EP 4 675 346 B1**
(45) Date of publication and mention of the grant of the patent: **09.09.2026**
(21) Application number: 24186948.6
(22) Date of filing: 05.07.2024
(51) Int. Cl.: G02F 1/167, G02F 1/1676, G02F 1/16761, G02F 1/16762

(54) **LIGHT MODULATOR, LIGHT MODULATOR METHOD AND SUBSTRATE FOR A LIGHT MODULATOR WITH HEATING FUNCTION**
LICHTMODULATOR, VERFAHREN ZUM MODULIEREN VON LICHT UND SUBSTRAT FÜR EINEN LICHTMODULATOR MIT ERWÄRMUNGSFUNKTION
MODULATEUR DE LUMIÈRE, PROCÉDÉ DE MODULATEUR DE LUMIÈRE ET SUBSTRAT POUR UN MODULATEUR DE LUMIÈRE À FONCTION DE CHAUFFAGE

(43) Date of publication of application: 07.01.2026
(73) Proprietor: eLstar Dynamics Patents B.V., 3235 CD Rockanje (NL)
(72) Inventor: MASSARD, Romaric Mathieu, 5651 GW Eindhoven (NL); MITIOGLU, Anatolie, 5651 GW Eindhoven (NL)
(74) Representative: DeltaPatents B.V.

(56) References cited:
- EP-B1- 4 288 833
- WO-A1-2024/002660

## Description

### TECHNICAL FIELD

The presently disclosed subject matter relates to a light modulator, a substrate for a light modulator, and a light modulator method.

### BACKGROUND

A known light modulator is disclosed in WO2022023180, included herein by reference. The known light modulator comprises transparent or reflective substrates. Multiple electrodes are applied to the substrates in a pattern across the substrate. A controller may apply an electric potential to the electrodes to obtain an electric field between the electrodes providing electrophoretic movement of the particles towards or from an electrode.

A dynamic glazing which enables an electric field across the substrates of an electrophoretic light modulator, as well as a light modulator and a substrate for a light modulator in accordance with the dynamic glazing, is disclosed in EP 4 288 833 B1.

### SUMMARY

A substrate for a light modulator, a light modulator, and a light modulator method are described in the accompanying claims. Specific embodiments of the invention are set forth in the dependent claims.

In an embodiment, a light modulator comprises a substrate, at least one electrode extending across the substrate on a surface of the substrate, the electrode is adapted for an electric potential to be applied to the at least one electrode causing modulation of an electric field in an optical layer of the light modulator, providing electrophoretic and/or dielectrophoretic movement of particles in the optical layer. The at least one electrode comprises a loop stretching across the surface, the loop being arranged for the flow of an electrical current into and out of the loop to induce heating across the substrate, a series of conductive bridging lines are arranged in he loop, each bridging line connecting from one point of the loop to another point of the loop, the series of bridging lines being arranged to create the electric field.

### BRIEF DESCRIPTION OF DRAWINGS

Further details, aspects, and embodiments will be described, by way of example only, with reference to the drawings. Elements in the figures are illustrated for simplicity and clarity and have not necessarily been drawn to scale. In the figures, elements which correspond to elements already described may have the same reference numerals. In the drawings,
Figure 1a schematically shows an example of an embodiment of a building block,
Figure 1b schematically shows an example of an embodiment of a substrate,
Figures 2a-2f schematically show an example of an embodiment of a substrate,
Figure 3a schematically shows an example of an embodiment of a light modulator,
Figure 3b schematically shows an example of an embodiment of a light modulator,
Figure 3c schematically shows an example of an embodiment of a car,
Figures 4a-4c schematically show an embodiment of a light modulator,
Figure 5a schematically shows an example of an embodiment of a substrate,
Figure 5b schematically shows an example of an embodiment of a substrate,
Figure 5c schematically shows an example of an embodiment of a substrate,
Figure 5d schematically shows an example of an embodiment of a substrate,
Figure 5e schematically shows an example of an embodiment of a substrate,
Figure 5f schematically shows an example of an embodiment of substrate,
Figure 5g1. schematically shows an example of an embodiment of a light modulator,

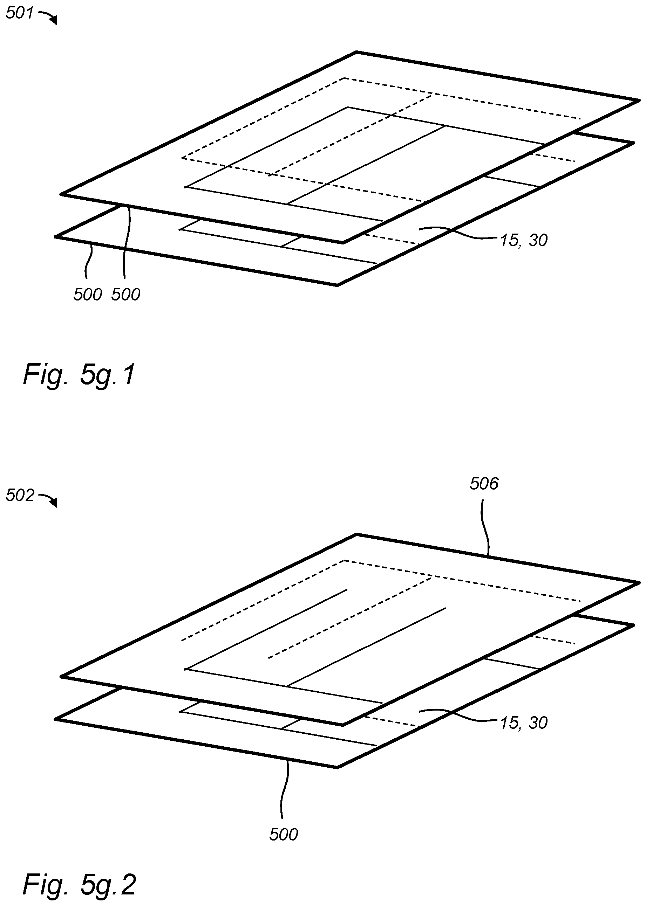

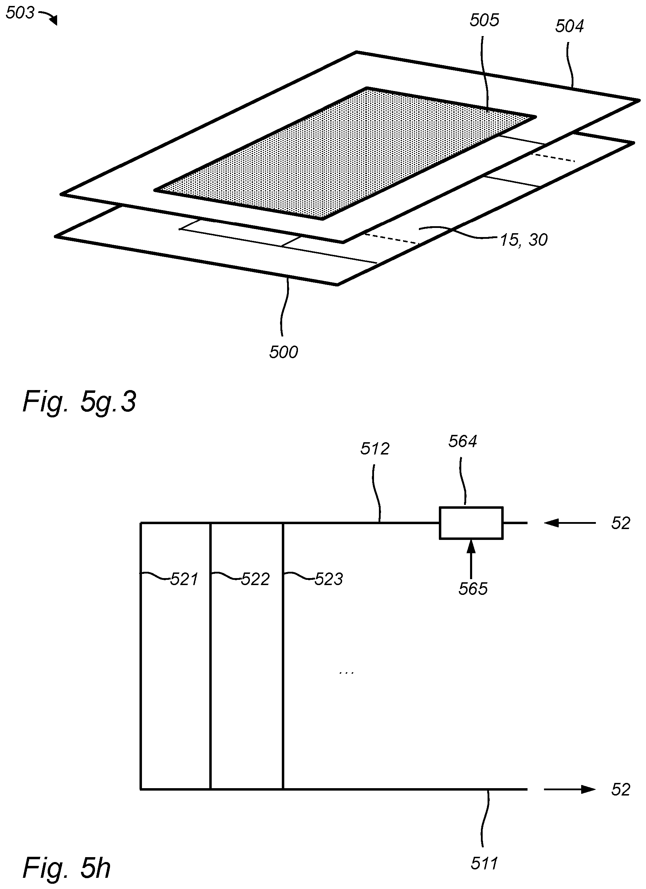

Figure 5g.2 schematically shows an example of an embodiment of a light modulator,
Figure 5g.3 schematically shows an example of an embodiment of a light modulator,
Figure 5h schematically shows an example of an embodiment of a loop electrode with an electronic component,

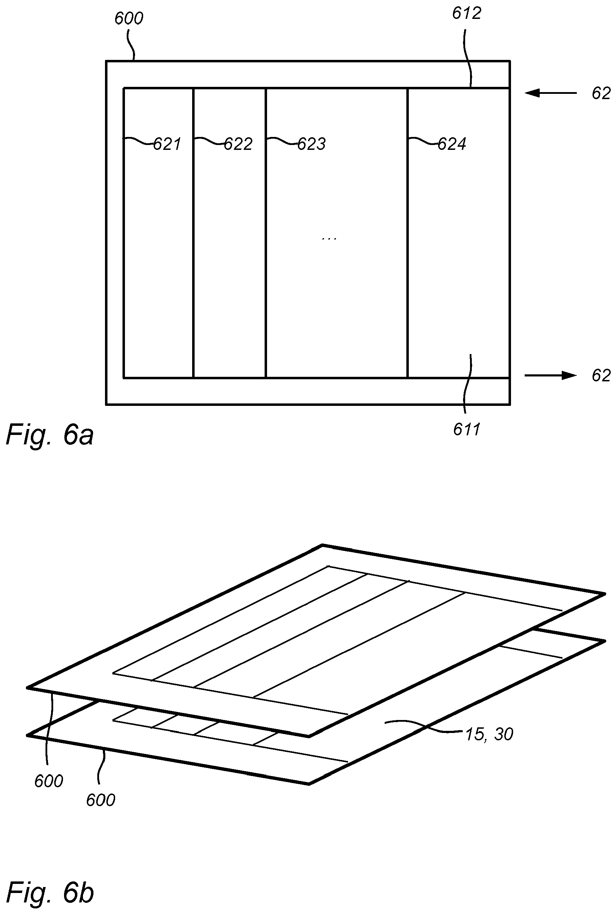

Figure 6a schematically shows an example of an embodiment of a substrate,
Figure 6b schematically shows an example of an embodiment of a light modulator,

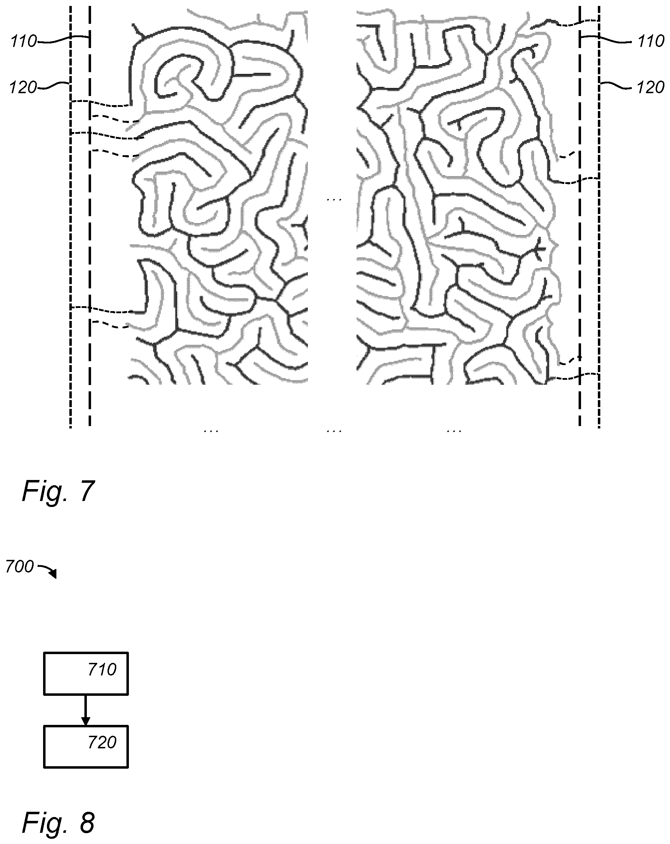

Figure 7 schematically shows an example of an embodiment of an electrode arrangement,
Figure 8 schematically shows an example of an embodiment of a method for a light modulator,

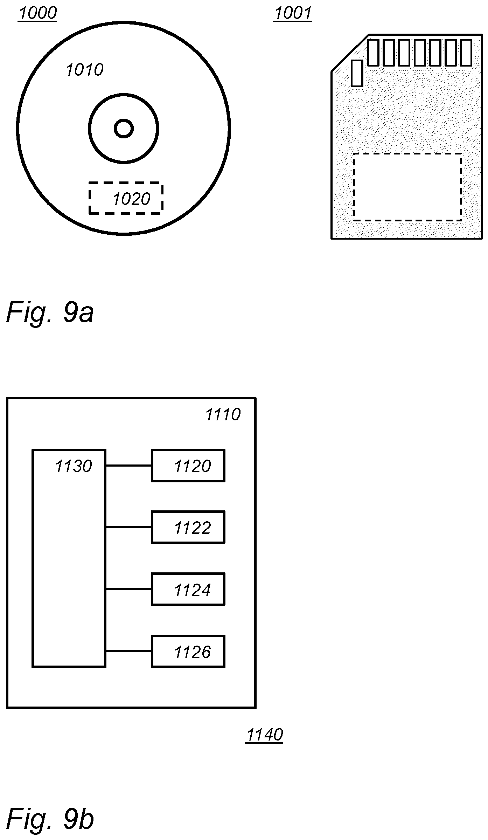

Figure 9a schematically shows a computer readable medium having a writable part comprising a computer program according to an embodiment,
Figure 9b schematically shows a representation of a processor system according to an embodiment.

### Reference signs list

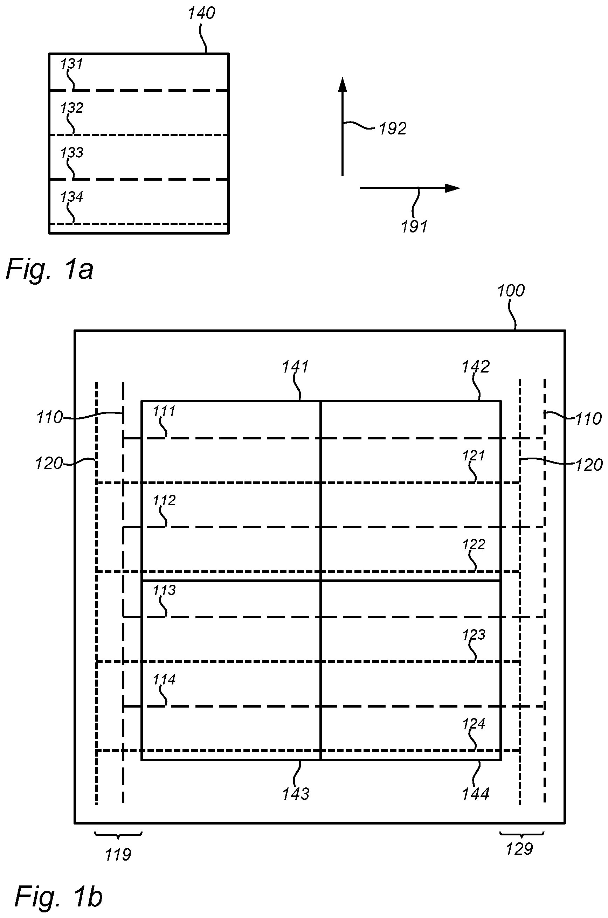

The following list of references and abbreviations corresponds to figures 1-7, and 9a-9b, and is provided for facilitating the interpretation of the drawings and shall not be construed as limiting the claims.
- 10: a light modulator
- 11: a first substrate
- 12: a second substrate
- 13, 13a, 13b: electrodes
- 14, 14a, 14b: electrodes
- 15: a fluid
- 16: a controller
- 30: particles
- 20: a car
- 21: a light modulator
- 40: a light modulator
- 41: a first substrate
- 42: a second substrate
- 43: a third substrate
- 46: a controller

- 100: a substrate
- 111-114: a main line
- 121-124: a main line
- 131-134: interdigitated electrodes
- 140: a building block
- 141-144: a building block
- 110, 120: a driving bus
- 119, 129: a connecting zone
- 191, 192: a direction

- 500: a substrate
- 501-503: a light modulator
- 52: a first electrode
- 511,512: an electrode line
- 521-524: a series of conductive bridging electrode lines
- 53: a second electrode
- 531,532: an electrode line
- 541-544: a series of conductive bridging electrode lines
- 551-554: a series of conductive extending electrode lines
- 533, 534: a displacement
- 561, 562: a substrate
- 563: substrate
- 504: a substrate
- 505: a surface electrode
- 506: a substrate
- 564: an electronic component
- 565: a control signal
- 600: a substrate
- 611,612: an electrode line
- 621-624: a series of conductive bridging electrode lines

- 1000, 1001: a computer readable medium
- 1010: a writable part
- 1020: a computer program
- 1110: integrated circuit(s)
- 1120: a processing unit
- 1122: a memory
- 1124: a dedicated integrated circuit
- 1126: a communication element
- 1130: an interconnect
- 1140: a processor system

### DESCRIPTION OF EMBODIMENTS

While the presently disclosed subject matter is susceptible of embodiment in many different forms, there are shown in the drawings and will herein be described in detail one or more specific embodiments, with the understanding that the present disclosure is to be considered as exemplary of the principles of the presently disclosed subject matter and not intended to limit it to the specific embodiments shown and described.

In the following, for the sake of understanding, elements of embodiments are described in operation. However, it will be apparent that the respective elements are arranged to perform the functions being described as performed by them.

In an embodiment, a light modulator is provided with a heating element, e.g., a loop electrode. The heating element is configured to heat the fluid, e.g., liquid, in the optical layer when a transition is desired. The heating will reduce viscosity of the optical layer fluid, and thus facilitate movement of particles in the optical layer. Reduced viscosity may be helpful in any transition, e.g., from opaque to transparent or vice versa. However, a heating function is convenient for a transition from clear to dark, as the heating will increase the natural motion of the particles and thus, even without support from electrophoretic and/or dielectrophoretic forces induced by the light modulator, cause diffusion of the particles. Depending on the nature of the particles, such diffusion could cause the light modulator to become less transparent, increasingly reflective, etc.

As will be explained herein, a particularly advantageous way to implement the heating function is in the form of an electrode that comprises a loop that stretches across the surface of one or both of the modulator's substrates. By arranging a current to flow through the loop, temperature in the optical layer between the substrates may be increased. Advantageously, the loop comprises a series of conductive bridging lines that may be used to modulate the electric field in the optical layer. Accordingly, the electrode may perform a double function, both as heating element and as a modulator of the electric field.

Substrates are disclosed, e.g., for use in a light modulator, in particular, dynamic glazing. The substrate is transparent, and at least one electrode is applied to a side of the substrate, the electrode extending in a pattern across the side of the first substrate. In a light modulator, one or both of the first and second substrates is transparent. In a glazing application both substrates are transparent. In other applications, e.g., a display, one of the two substrates may be opaque.

Dynamic glazing, also known as smart glazing, may comprise a system wherein the transparency or optical properties of a glazing material are altered in response to an external electrical input. This system may allow for active control over light and heat transmission, thereby enhancing energy efficiency and user comfort in various architectural or vehicular applications.

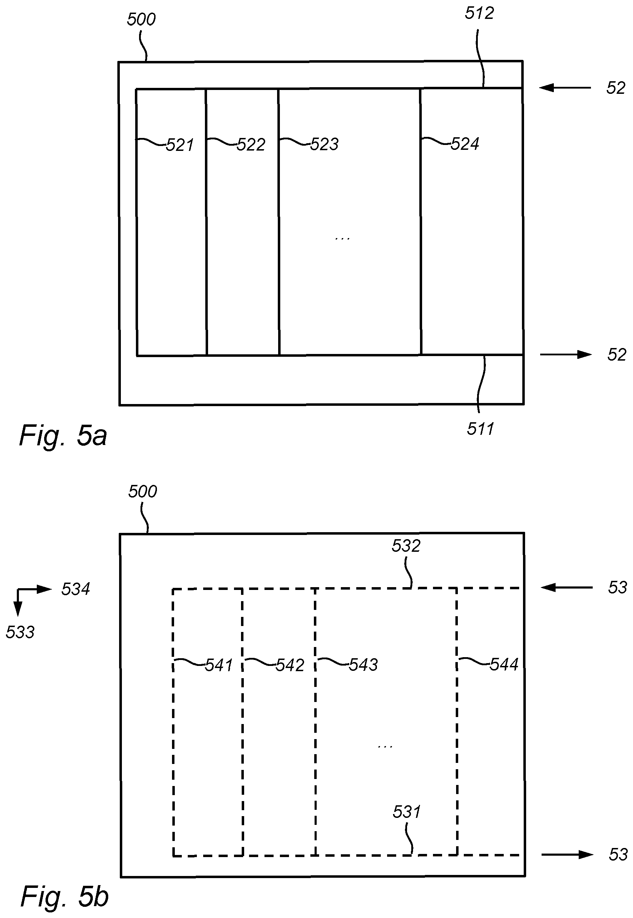

Figures 1a- 4c provide various examples of the electrode system on the first and second substrate and how they may be implemented or used in a light modulator. Figure 5a and following focus on the heating element, e.g., a loop electrode, e.g., its placement and/or composition, and/or how it may interact with the light modulator function.

Some of the known light modulators which may be provided with a heating element are based on the electrophoretic principle. For example, the substrate may comprise multiple interdigitated electrodes applied to the substrate, e.g., two electrodes, each of the multiple electrodes being arranged in a pattern across the substrate, the multiple interdigitated electrodes being arranged alternatingly with respect to each other on the substrate. Having multiple interdigitated electrodes allows local control over the electric field enabling electrophoretic control of particles.

Electrophoretic light modulators are explained more extensively herein and are used as the motivating example. In an embodiment, a light modulator comprises a first substrate and a second substrate. At least one of the first and second substrates may be according to an embodiment, having one or more heating elements, e.g., one or more loop electrodes. For example, the first and second substrates may be arranged with inner sides opposite to each other, using a substrate according to an embodiment. An optical layer is arranged between the first and second substrates. The electrode is arranged to modulate an electrical field in the optical layer. The optical layer comprises a fluid, e.g., liquid, comprising particles, wherein the particles are electrically charged or chargeable. The particles may be moved under control of the electrical field. For example, a controller may be configured to apply an electric potential to the electrode to obtain an electric field at the electrode providing electrophoretic movement of the particles towards or from one of the at least one electrode causing modulation of the optical properties of the light modulator. For example, optical properties may include a transition between a high-transparent state and a low-transparent state or vice versa. Note that a transition may also alter thermal properties of the light modulator.

Below a number of known light modulators are reviewed, showing some of the options in technology and electrodes. These known light modulators can advantageously be modified by adding a heating element, e.g., a loop electrode, according to an embodiment. These examples also show light modulators with varying numbers of electrodes on a substrate.

International patent applications WO2011012499 A1 (included herein by reference) and WO2011131689 (included herein by reference) disclose light modulators in the form of electrophoretic display devices, e.g., e-Ink displays. A pixel of the display comprises an accumulation electrode and a field electrode, the accumulation electrode being arranged at a storage area for accumulating charged particles away from an aperture area, and the field electrode occupying a field-electrode area being at least a part of an aperture area of the pixel, the charged particles being movable between the accumulation electrode and the field electrode. In an embodiment, two electrodes are applied on a single substrate. Accumulation electrode and/or field electrode may both include a heating element, e.g., a loop electrode.

US patent 10921678 with title 'Electrophoretic device', included herein by reference shows an electrophoretic device having only one patterned electrode on one of two substrates. For example, the one substrate with an electrode according to US 10921678 may be replaced with a substrate according to an embodiment comprising one single electrode. For example, an embodiment comprises a first transparent substrate with a field electrode, and a second substrate opposite of the first substrate, with an accumulation electrode. The first substrate and the second substrate enclose a pixel with a fluid and particles. In use an applied electric field to the field electrode and the accumulation electrode provides movement of the particles from the field electrode and the accumulation electrode and vice versa. Any of these cited electrophoretic or dielectrophoretic light modulators may be adapted by including one or more heating elements, e.g., a loop electrode, according to an embodiment.

US patent 8054535B2 (included herein by reference) and US patent 8384659b2 (included herein by reference) show alternative examples of electrophoretic light modulators in which one of two substrates has two patterned electrodes, while the other substrate has either zero or one electrode.

Patterned electrodes are also used in dielectrophoretic light modulators. For example, US patent application US2005185104A1 (included herein by reference) and US20180239211A1 (included herein by reference) show dielectrophoretic light modulators having a substrate with a patterned electrode. Any of these cited electrophoretic or dielectrophoretic light modulators may be adapted by including one or more heating elements, e.g., a loop electrode, according to an embodiment.

The paper "Reversible Metal Electrodeposition Devices: An Emerging Approach to Effective Light Modulation and Thermal Management", included by reference, also shows a substrate on which a patterned electrode is applied. A heating element, e.g., a loop electrode, according to an embodiment may be included herein.

An embodiment of a substrate may be used in an electrochromic device (ECD). An electrochromic device (ECD) controls optical properties such as optical transmission, absorption, reflectance, and/or emittance in a continual but reversible manner on application of voltage (electrochromism). This property enables an electrochromic device to be used for applications like smart glass, electrochromic mirrors, and electrochromic display devices. A heating element, e.g., a loop electrode, according to an embodiment may be included herein.

An electrochromic device is described, e.g., in the paper "Silver grid electrodes for faster switching ITO free electrochromic devices" by António Califórnia et al., included herein by reference. The paper describes the preparation of an electrochromic device, in this case, one which is ITO-free. A heating element, e.g., a loop electrode, according to an embodiment may be included herein.

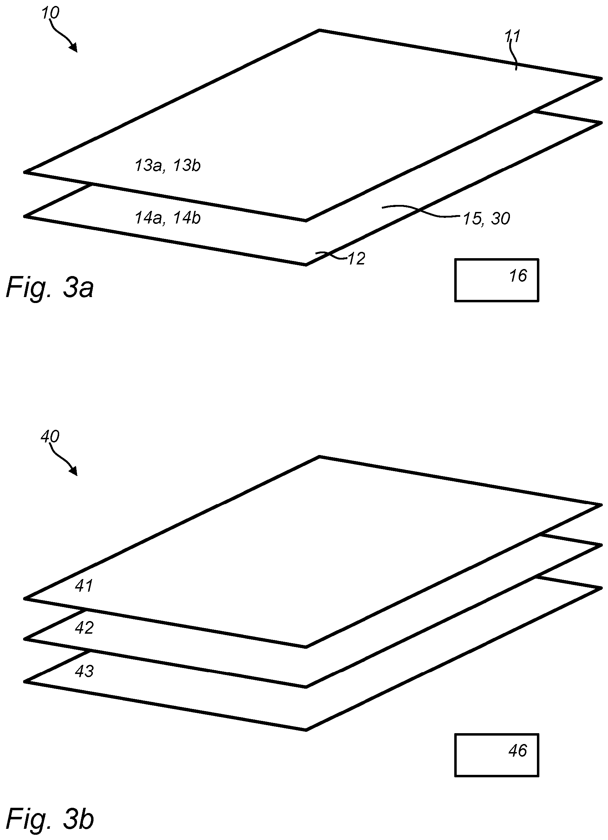

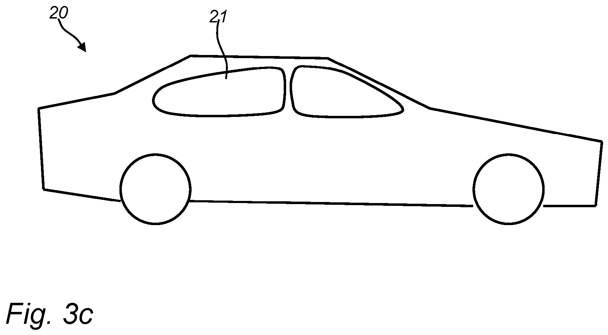

An electrochromic device uses electrically conductive electrodes applied on a substrate. The cited paper uses silver grids, made using silver ink, as electrically conductive electrodes. An electrochromic device may comprise an electrochromic material. The cited paper uses poly(3,4-ethylenedioxythiophene) polystyrene sulfonate (PEDOT:PSS). In an electrochromic device, at least one electrode, e.g., the electrically conductive electrode, is applied to a substrate. The electrode being arranged in a pattern across the substrate. The cited paper discloses two different grid patterns: a regular hive and a regular ladder design. See table 1 and figure 3 of the cited paper. A heating element, e.g., a loop electrode, according to an embodiment may be included herein.

Electrodes may be applied to a substrate by screen-printing on a substrate, in the case of the cited paper, polyethylene terephthalate (PET). The electrodes are typically an electrically conductive material, e.g., a metal or metal oxide. In the cited paper, silver ink was used to screen print the grids on PET using a RokuPrint RP 2.2 equipment and a 180 wired mesh. The samples were allowed to dry in an oven at 130°C for 15 min. On top of these silver grids, one or two layers of PEDOT:PSS SV3 were posteriorly printed by screen printing. A heating element, e.g., a loop electrode, according to an embodiment may be included herein.

Another example of an electrochromic device is given in US patent 5161048, with title "Electrochromic window with metal grid counter electrode and acidic polyelectrolyte", included herein by reference. For example, an electrochromic device may comprise a transparent electrochromic film and an ion-conductive layer disposed between a pair of electrodes. The metal grid electrode is used for the electrodes. Figure 1 of the patent shows a metal grid according to the cited patent. To form the counter electrode, a metal grid is disposed adjacent to the second glass substrate.

For example, in an embodiment of an electrochromic device, the electrochromic device may comprise a transparent substrate, an electroconductive electrode member, a transparent electrochromic film in contact with said electroconductive electrode member, an ion-conductive polymer in contact with said electrochromic film; and a patterned conductive electrode in contact with said ion-conductive polymer. A heating element, e.g., a loop electrode, according to an embodiment may be included.

A substrate according to an embodiment can be beneficially applied in several other technologies. For example, the light modulator may be a dielectrophoretic light modulator, e.g., as shown in US20050185104 A1, included herein by reference. A heating element, e.g., a loop electrode, according to an embodiment may be included herein.

A substrate as in an embodiment may also be used in other electrowetting and OLED applications. In OLED and electrowetting, electrodes are needed on only one of the substrates. The substrate with electrodes may be according to an embodiment including a heating element, e.g., a loop electrode.

Yet other dynamic glass technologies may be used.

For example, an optical layer for a light modulator, e.g., in dynamic glazing, may use LCD (Liquid Crystal Display) technology. For example, the optical layer may comprise liquid crystal molecules that can be aligned to control the amount of light passing through the display. When an electric current is applied to the liquid crystal molecules, they change their alignment and modify the way that light passes through the material. The optical layer with LCD material may be placed between two layers of glass or plastic and connected to an electrical circuit. By controlling the electric current applied to the LCD material, the amount of light passing through the glazing may be adjusted. A heating element, e.g., a loop electrode, according to an embodiment may be included herein.

An optical layer for a light modulator, e.g., in dynamic glazing, may use Suspended Particle Device (SPD) technology. The optical layer may comprise particles suspended within a thin film or laminate. By applying an electrical current to the SPD film, the particles align and modify the amount of light passing through the material, allowing for dynamic control of the glazing. When the electrical current is turned off, the suspended particles randomize and allow more light to pass through, creating a clear or transparent effect. When the electrical current is turned on, the particles align and absorb more light, creating a darker or tinted effect. A heating element, e.g., a loop electrode, according to an embodiment may be included herein.

In an application of the light modulator for glazing, both substrates are typically transparent. In other applications, e.g., in television, e-readers, etc., only one substrate may be transparent.

**Figure 1b** schematically shows an example of an embodiment of a substrate 100. The substrate is particularly useful for use in a light modulator, e.g., of a kind described herein. Across the substrate, an electrode system is applied in the form of multiple interdigitated electrodes. Shown in figure 1b are two interdigitated electrodes. The two interdigitated electrodes are both of loop type: they comprise a loop stretching across the surface, and a series of conductive bridging lines are arranged in the loop, each bridging line connecting from one point of the loop to another point of the loop. The loop is arranged for the flow of an electrical current into and out of the loop to induce heating across the substrate; the bridging lines can also contribute to the heating. Furthermore, the series of bridging lines are arranged to create the electric field. An electrode of loop type has a dual purpose it can act as a heater and manipulate electric fields. These two functions can be performed after each other, e.g., during a heating period and a subsequent driving period. The heating may be used in a light modulator to heat the optical layer. This reduces viscosity, speeds up transitions, and disperses particles. For example, during the heating period a current flows in the electrode of loop type, while during the driving period no current flows, though a voltage may be applied to the electrode. An electrode of loop type may also be used in a combined heating plus driving period, in which both a current flows and a voltage is used to modulate the electrical field.

The motivating example use of the substrate is in an electrophoretic light modulator. Typically, an electrophoretic light modulator comprises at least two substrates, each having at least two electrodes at each of the substrates; this is not necessary though, for example, an electrophoretic light modulator may comprise a single substrate with 2 electrodes and an opposite substrate with 1 electrode. In any case, preferably, at least one of the substrates in the light modulator is according to an embodiment.

An embodiment of a light modulator comprises a first substrate according to an embodiment and a second substrate. The first and second substrates are arranged with inner sides opposite to each other. At least one electrode is applied to the inner side of the first substrate. An optical layer is arranged between the first and second substrates. A controller is configured to apply an electric potential to the at least one electrode causing modulation of the optical properties of the light modulator. One or both of the first and second substrates are transparent and/or translucent.

There are many different kinds of light modulators that use at least one electrode applied to a substrate. The optical layer and controller may be arranged to modulate optical properties using effects that depend on the potential on the electrode; examples include the dielectrophoretic effect and the electrophoretic effect. For example, optical modulation may comprise the modulation of particles arranged in the optical layer. The number of electrodes may range from one on a single substrate, to multiple electrodes on one or both substrates.

The optical layer arranged between the first and second substrates may comprise particles, e.g., suspended in a fluid. The controller may be configured to apply an electric potential to the electrodes causing the particles to move thus modulating the optical properties of the light modulator.

In an embodiment, the particles comprise electrically charged or chargeable particles, and the controller is configured to apply an electric potential to the electrode to obtain an electric field providing electrophoretic movement of the particles. In an embodiment, the electric field is arranged between at least two electrodes arranged on the same substrate or arranged on different substrates.

In an embodiment, the particles comprise dielectric particles, and the controller is configured to apply an electric potential to the electrode to apply an electric field gradient to the particles enabling the particles to be moved under the action of dielectrophoretic forces.

The controller may apply an electric signal to one or more of the electrodes. Embodiments that control dielectrophoretic forces may use a signal that comprises a DC signal and/or an AC signal. Embodiments that control electrophoretic forces may use a signal that comprises a DC signal and/or an AC signal.

Shown in figure 1b are two electrodes on the same surface. The two electrodes are indicated in figure 1b in two different dashing styles. There could be more than two electrodes on the same side of the substrate, e.g., to facilitate more fine-grained control of voltage differences across the substrate. The electrodes are applied to a same side of the substrate. Applying electrodes to a substrate may be done lithographically, e.g., using a mask representing the electrode(s) pattern. Electrodes may also be applied by embedding them in the substrate.

An electrode is electrically connected, e.g., has the same electric potential everywhere. An electrode may comprise a driving bus and main lines. At least, the main lines are interdigitated with main lines of a further electrode. Typically, the electrodes extend in a substantially straight line across the substrate, while the main lines are convoluted.

In an embodiment, the two substrates of a light modulator each have two electrodes arranged at their inner surface. Though, as mentioned, multiple electrodes on one or both substrates are not needed. For example, an embodiment of a light modulator comprises a first substrate and a second substrate. For example, the first substrate may comprise one electrode, the second substrate may not comprise electrodes. For example, the first substrate may comprise two electrodes, the second substrate may comprise one electrode. For example, the first substrate may comprise two electrodes, the second substrate may comprise two electrodes. For example, the first substrate may comprise more than two electrodes, the second substrate may comprise two or more electrodes.

Light modulators, wherein each substrate comprises two electrodes are used as a motivating example, though. Designs of substrates featuring two electrodes may be adapted to have a single electrode, e.g., by connecting the two electrodes, or by removing one of the electrodes. Adapting a substrate in such a manner may make it suitable for use in different technologies.

Each of the multiple electrodes is arranged in a pattern across the substrate. The multiple electrodes are arranged alternatingly with respect to each other on the substrate. Typically, an electrode comprises multiple main lines, that each stretch across the substrate. The main lines of the electrodes alternate, e.g., interdigitate. For example, in figure 1b the first electrode comprises main lines 111-114, and the second electrode comprises main lines 121-124. The electrodes are each driven by its driving bus. Figure 1b shows two driving buses: driving bus 110 and driving bus 120. The electrodes also serve to connect the main lines together. For example, in figure 1b, the driving bus 110 drives and connects main lines 111-114; and the driving bus 120 drives and connects main lines 121-124. There can be more main lines than the four shown in this example. The use of main lines is advantageous as it reduces the length of the electrodes, but it is not necessary. A design using only one main line per electrode is not impossible, though having multiple is advantageous. The electrodes are adapted to form a heating element, e.g., a loop electrode, to enable heating of the optical layer.

In the example substrate 100, two driving busses are provided for each electrode, arranging, in this case, each electrode in a ladder structure. For example, the two driving busses marked 110 may be considered the rails, while the main lines 111-114 may be considered the rungs. Note that main lines 111-114 function as bridging electrodes. Substrate 110 may be heated by flowing current into one of the driving busses 110, and out the other. The electric field may be manipulated by placing a voltage, a potential, on the bridging lines 111-114. The same holds for the other electrode.

The multiple main lines of the first and second electrodes are arranged alternatingly with respect to each other on the substrate.

In this example, there are no other connections between the main lines of an electrode than through the common driving bus. In an embodiment, an electrode comprises a mesh electrode, that is, it may have additional electrical connections added between electrode lines of the same electrode. This increases the reliability of the electrode. Such additional connections typically cross an electrode line of another electrode, which may be resolved by placing the additional electrical connection in part on a different level with respect to the substrate than the electrode line being crossed. For example, one may place the entire electrodes at a different level than another electrode. In this way, additional connections may be placed without short circuits arising.

A motivating application for a substrate such as substrate 100 is in smart glazing, e.g., a light modulator, which may be applied in domestic housing, offices, greenhouses, cars, and the like. The level of transparency or reflectivity of the smart glazing can be adapted electrically. For example, in smart glazing, two substrates such as substrate 100 would be stacked so that the sides on which the two electrodes are applied face each other. A fluid with particles is enclosed between the two substrates. Smart-glazing embodiments are further discussed below. In an embodiment, electrodes, e.g., two or more electrodes are applied to one surface of each substrate. There could also be one, two, or more electrodes on the other surface of substrate 100, e.g., to facilitate stacking of three or more substrates. For example, substrate 100 may be used for substrate 11, and/or 12; or for one or more of substrates 41-43.

Some embodiments below show examples of modulating a transparency or reflectivity level. Light modulators may be adapted for other optical effects. For example, if desired, embodiments could be modified to different levels of translucency instead of different levels of transparency. If desired, the type of particle that is used in an embodiment can be varied, e.g., to particles that differ in which wavelengths they absorb or reflect, and how specular or diffuse the reflection is. For example, in an embodiment, a light modulator can modulate different levels of reflection. Particles can also emit light. Stacking multiple optical layers further increases the possibilities.

Having two sets of alternating main lines is sufficient to provide electrically adaptable glazing; due to the alternating two sets, the electric field at any part of the substrate can be controlled as two opposite electrodes border the part from two opposing sides. Interestingly, when using the heating function of a loop electrode for particle dispersion a single electrode on each substrate suffices as well.

Interestingly, the pattern in which the electrodes stretch across the substrate may be created by multiple repeated building blocks. Shown in figure 1b, the electrodes on substrate 100 shows four blocks: blocks 141, 142, 143 and 144 which are all substantially the same. The number of building blocks may be larger than four. The building blocks repeat in both directions across the substrate, e.g., a first direction 191, e.g., an x-direction, shown horizontally in the figure, and a second direction 192, e.g., a y-direction, shown vertically in the figure. Using building blocks is advantageous as it allows manufacture using a stepper machine; using building blocks is not necessary.

For example, **figure 1a** schematically shows an example of an embodiment of a building block 140. Building block 140 comprises multiple interdigitated electrodes extending in at least 2 directions across the building block. Shown in figure 1a are four electrodes: electrode 131-134. When the building blocks are repeated across a substrate in two directions, the electrodes in the building block will form the electrodes, e.g., form the multiple main lines of the electrodes. Note that the building blocks are typically connected in a substrate-electrode design tool. Typically, a building block comprises more than four electrode lines. For example, in a range of embodiments between 8 and 12 main lines are used. The number of electrode lines can be much higher though. For example, a building block may comprise many short electrode lines near the edges that connect to lines of other building blocks when the block is repeated. Taking such short offshoots into account, the number of lines could go up to, say, 50. Clearly, when using larger building blocks, the number of electrode lines may go up as well. In an embodiment, the number of electrode lines in a building block is between 8 and 50, or between 8 and 25, etc.

The electrodes that are formed by repeating building blocks are connected to the driving buses. Typically, electrode lines in a building block are connected to electrode lines in neighboring blocks by merging corresponding electrode lines; this is not necessary though, between repeated building blocks, connection zones can be inserted that connect corresponding electrode lines.

This step can connect up multiple main lines together, thus forming a single electrode. Figure 1b shows two connecting zones 119 and 129 in which the main lines belonging to the same electrode are connected to driving bus 110 and driving bus 120, respectively.

The electrodes that are shown in figure 1a are alternately dashed in the same dashing style of figure 1b. Indeed, it happens to be the case in this example, that a particular electrode of the building block of figure 1a will always end up in the first electrode or in the second electrode, e.g., as indicated in this case by the dashing style. This is, however, not necessarily the case. An electrode in a building block may end up as part of the first electrode or as part of the second electrode. This can change, e.g., as a result of the parity of the number of electrodes in the building block, the pattern in which the building blocks are repeated, etc.

For example, a particular pattern of repeated building blocks may be used for a light modulator with two electrodes, in which one might assign alternating main lines to the two electrodes. However, the same pattern of repeated building blocks may be used for a light modulator with three electrodes, in which one might assign every next set of three main lines to the three electrodes.

Furthermore, the building block shown in figure 1a is square, but this is also not needed. For example, a building block may be rectangular. In an embodiment, building block shape(s) could form a so-called tessellation. For example, a building block may be a triangle, a hexagon or even a combination of plane-filling shapes.

As said, figures 1a and 1b are schematic. This is especially the case for the depiction of the electrodes. An electrode as shown in figure 1a is straight, however, in an embodiment, an electrode on the building block is more convoluted, e.g., curved. By adapting the shape of the electrodes undesirable diffraction effects can be altered.

In an embodiment, a dimmable mirror comprises a light modulator according to an embodiment. For example, the dimmable mirror comprises a transparent substrate, an optical layer, and a reflective substrate. One or both of the substrates is according to an embodiment. The dimmable mirror may be electrophoretic. Typically, each substrate has two electrodes, but this is not necessary.

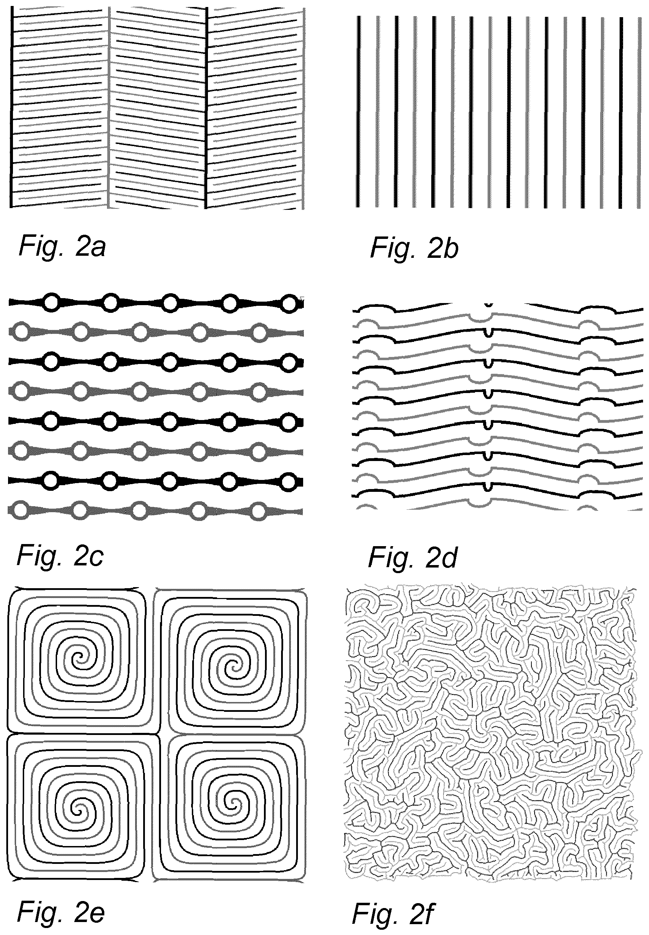

**Figures 2a-2f** schematically show examples of substrates with interdigitated electrodes. These may be embodied on a substrate with two electrodes, e.g., by alternatingly connected electrodes. Figures 2a-2d may also be embodied on a substrate with multiple electrodes, e.g., by connecting in sequences of 3 or 4 or more electrodes.

Figures 2e and 2f show designs with two electrodes on the surface of the substrate. Either design could be modified to have only a single electrode on the surface of the substrate, e.g., by removing one of the two electrodes. For example, such a modified design could be used in a light modulator that uses a substrate with a single electrode.

The designs shown can be realized in a single plane, without having crossing electrodes. In particular, if these designs are connected to two driving buses, no crossing electrodes are needed. When more than two electrodes are used, or if more complicated electrode patterns are used, then crossing of the electrodes may be used, or may even become necessary. Such crossings are possible however for example, at the location where two electrode lines cross, a dielectric material may be arranged between the electrodes. For example, such an insulator may be deposited at the crossing location. For example, a first electrode is in a first plane of the substrate and a second electrode is in a second plane of the substrate.

Two substrates according to an embodiment may be combined to form a light modulator. The light modulator is particularly suited to glazing. An exemplary embodiment of a light modulator is shown below.

**Figure 3a** schematically shows an embodiment of a light modulator 10, which may be applied in smart glazing.

Reference is made to patent application PCT/EP2020/052379, which is included herein by reference; this application comprises advantageous designs for light modulators, which may be further improved, e.g., by including electrodes, building blocks, and/or substrates as explained herein.

Light modulator 10 can be switched electronically between a transparent state and a non-transparent state and vice versa, or between a non-reflective state and a reflective state and vice versa. Light modulator 10 comprises a first substrate 11 and a second substrate 12 arranged opposite to each other. On an inner side of first substrate 11, at least two electrodes are applied: electrodes 13a, 13b. These at least two electrodes are together referred to as electrodes 13. On an inner side of second substrate 12, at least two electrodes are applied: electrodes 14a, 14b. These at least two electrodes are together referred to as electrodes 14. One or more of substrates 11 and 12 may be provided with one or more heating elements, e.g., a loop electrode, to enable heating of the optical layer prior or during transitioning of optical states.

There are various possibilities. Electrodes 13a and/or electrode 13b may be arranged as a loop electrode configured for temperature control as well as for optical control. Electrodes 14a and/or electrode 14b may be arranged as a loop electrode configured for temperature control as well as for optical control. All four electrodes may be loop electrodes. All electrodes on one substrate may be loop electrodes. Only one of the four electrodes may be a loop electrode. Examples are provided herein.

In an embodiment, one or more electrodes may be applied on substrate 11 and/or substrate 12 which are dedicated to temperature control.

A fluid 15 is provided between said substrates. The fluid comprises particles 30, e.g., nanoparticles and/or microparticles, wherein the particles are electrically charged or chargeable. For example, particles may carry a charge on their surface intrinsically. For example, the particle may be surrounded by a charged molecule. The fluid may be a liquid.

The electrodes are arranged for driving particles 30 to move towards or away from electrodes, depending on the electric field applied. The optical properties, in particular the transparency or reflectivity of the light modulator, depend on the location of particles 30 in the fluid. For example, a connection may be provided for applying an electric field to the electrodes.

At least one, but preferably both electrodes 13 and 14 are according to an embodiment.

In an example, substrate 11 and substrate 12 may be optically transparent outside of the electrodes, typically >95% transparent at relevant wavelengths, such as >99% transparent. Taking electrodes into account, transparency can be much lower, e.g., 70%. The term "optical" may relate to wavelengths visible to a human eye (about 380 nm- about 750 nm), where applicable, and may relate to a broader range of wavelengths, including infrared (about 750 nm - 1 µm) and ultraviolet (about 10 nm-380 nm), and sub-selections thereof, where applicable. In an exemplary embodiment of the light modulator, a substrate material is selected from glass, and polymer.

In another example, one substrate, such as a bottom substrate 12, may be reflective or partially reflective, while the top substrate 11 is transparent. The optical properties, in particular the reflectivity of the light modulator, depend on the location of particles 30 in the fluid. When the panel is in the open state (vertical drive), the particles will mostly be located between opposite electrodes of the two substrates, such that incident light can pass through the transparent top substrate and the optical layer relatively unhindered and is reflected or partially reflected on the bottom substrate.

The distance between the first and second substrates is typically smaller than 30 µm, such as 15 µm. In an exemplary embodiment of the light modulator a distance between the first and second substrates is smaller than 500 µm, preferably smaller than 200 µm, preferably less than 100 µm, even more preferably less than 50 µm, such as less than 30 µm.

In an example, the modulator may be provided in a flexible polymer, and the remainder of the device may be provided in glass. The glass may be rigid glass or flexible glass. If required, a protection layer may be provided on the substrate. If more than one color is provided, more than one layer of flexible polymer may be provided. The polymer may be polyethylene naphthalate (PEN), polyethylene terephthalate (PET) (optionally having a SiN layer), polyethylene (PE), etc. In a further example, the device may be provided in at least one flexible polymer. As such, the modulator may be attached to any surface, such as by using an adhesive.

Particles 30 may be adapted to absorb light and thereby prevent certain wavelengths from passing through. Particles 30 may reflect light; for example, the reflection may be specular, diffusive, or in between. A particle may absorb some wavelengths and reflect others. Particles may also or instead emit light, e.g., using phosphorescence, fluorescence, or the like. Even the fluid may emit light, whose emittance is modulated by changing the location of particles.

In an exemplary embodiment of the light modulator, a size of the nanoparticles is from 20-1000 nm, preferably 20-300 nm, more preferably smaller than 200 nm. In an exemplary embodiment of the light modulator, the nanoparticles/microparticles may comprise a coating on a pigment, and preferably comprise a core. In an exemplary embodiment of the light modulator, the coating of the particles is made from a material selected from conducting and semiconducting materials.

In an exemplary embodiment of the light modulator, the particles are adapted to absorb light with a wavelength of 10 nm-1 mm, such as 400-800 nm, 700 nm to 1 µm, and 10-400 nm, and/or are adapted to absorb a part of the light with a wavelength-range falling within 10 nm-1 mm (filter), and combinations thereof.

In an exemplary embodiment of the light modulator, the particles are electrically charged or chargeable. For example, a charge on the particles may be 0.1e to 10e per particle (5*10⁻⁷-0.1 C/m²).

In an exemplary embodiment of the light modulator, the fluid is present in an amount of 1-1000 g/m², preferably 2-75 g/m², more preferably 20-50 g/m², such as 30-40 g/m². It is a big advantage that with the present layout much less fluid, and likewise particles, can be used.

In an exemplary embodiment of the light modulator, the particles are present in an amount of 0.01-70 g/m², preferably 0.02-10 g/ m², such as 0.1-3 g/m².

In an exemplary embodiment of the light modulator, the particles have a color selected from cyan, magenta, and yellow, and from black and white, and combinations thereof.

The light modulator can be also configured to only, or primarily, modulate non-visible light such as UV or near-IR, e.g., respectively in the range of about 10 nm-380 nm, and in the range of about 750 nm - 1 µm.

In an exemplary embodiment of the light modulator, the fluid comprises one or more of a surfactant, an emulsifier, a polar compound, and a compound capable of forming a hydrogen bond.

Fluid 15 may be an apolar fluid with a dielectric constant less than 15. In an exemplary embodiment of the light modulator, the fluid has a relative permittivity εr of less than 100, preferably less than 10, such as less than 5. In an exemplary embodiment of the light modulator, fluid 15 has a dynamic viscosity of above 10 mPa.s.

Electrodes 13a, 13b and electrodes 14a, 14b are in fluidic contact with the fluid. The fluid may be in direct contact with the electrodes, or indirectly, e.g., the fluid may contact a second medium with the electrode, such as through a porous layer. In an embodiment, the electrodes cover about 1-30% of the substrate surface. In an embodiment, the electrodes comprise an electrically conducting material with a resistivity of less than 100 nΩm (at 273K; for comparison, typically used ITO has 105 nΩm), which is similar to an electrical conductivity >1*10⁷ S/m at 20°C).

In an embodiment of the light modulator, electrodes comprise copper, silver, gold, aluminum, graphene, titanium, indium, and combinations thereof, preferably copper. The electrodes may be in the form of microwires embedded in a polymer-based substrate; for example, copper microwires.

A connection for applying an electric field to the electrodes, wherein the applied electric field to the electrodes provides movement of the nano- and microparticles from a first electrode to a second electrode and vice versa. A connection for applying an electric field to the electrodes may be provided. For example, in an exemplary embodiment of the light modulator, an electrical current is between -100 to +100 µA, preferably -30 to +30 µA, more preferably -25 to +25 µA. For example, a power provider may be in electrical connection with the at least two electrodes. The power provider may be adapted to provide a waveform power. At least one of amplitude, frequency, and phase may be adaptable to provide different states in the light modulator. For example, these aspects of the power may be adapted by a controller 16. The controller 16 may be connected to the heating elements, e.g., a loop electrode, of the light modulator.

Light modulator 10 may comprise one or more segments, a segment being a single optically switchable entity, which may vary in size. The substrates enclose a volume, which may be a segment, at least partly.

The present device may comprise a driver circuit for changing the appearance of (individual) segments by applying an electric field. As such also the appearance of the light modulator, or one or more parts thereof, may be changed. For example, a segment may have an area of at least 1 mm². The present design allows for stacking to allow for more colors; e.g., for full-color applications, a stack of two or three modulators could provide most or all colors, respectively.

Having one or more segments allows the light modulator to be controlled locally; this is advantageous for some applications but not necessary. For smart glazing, a light modulator may be used with or without segments. For example, applied in smart glazing, transparency or reflectivity may be controlled locally, e.g., to block a sun-patch without reducing transparency or reflectivity in the whole window. Segments may be relatively large, e.g., having a diameter of at least 1 mm, or at least 1 cm, etc.

In an exemplary embodiment of the light modulator, substrates (11,12) are aligned, and/or electrodes (13,14) are aligned. For example, electrodes 13a, 13b and electrodes 14a, 14b may be aligned to be opposite each other. In aligned substrates, electrodes on different substrates fall behind each other when viewed in a direction orthogonal to the substrates. When the light modulator is disassembled, and the substrates are both arranged with electrodes face-up, then the electrode patterns are each other's mirror image.

Aligning substrates may increase the maximum transparency or reflectivity of the light modulator. On the other hand, when selecting a light modulator for more criteria than the range of transparency or reflectivity, etc., it may be better not to align or not fully align the two substrates. Light modulators can be stacked. For example, two stacked light modulators can be made from three substrates, wherein the middle one has electrodes on both its surfaces. In an embodiment of the light modulator, optionally at least one substrate 11,12 of a first light modulator is the same as a substrate 11,12 of at least one second light modulator. For stacked modulators, alignment may also increase maximum transparency or reflectivity, but it may be detrimental to other considerations, e.g., diffraction.

**Figure 3b** schematically shows an example of an embodiment of a light modulator 40. Light modulator 40 is similar to light modulator 10, except that it comprises multiple optical layers; in the example as shown, two optical layers. There may be more than two optical layers. Each optical layer is arranged between two substrates. Light modulator 40 can be regarded as a stack of two-substrate light modulators as in figure 3a. As shown, light modulator 40 comprises three substrates: first substrate 41, second substrate 42, and third substrate 43. Between substrates 41 and 42 is an optical layer, and between substrates 42 and 43 is an optical layer. The optical layers may be similar to those in light modulator 10. A controller 46 is configured to control the electrical current on the electrodes of the substrates. For example, in figure 3b, controller 46 may be electrically connected to at least 4 times 2 equals 8 electrodes.

Interestingly, the particles in the multiple optical layers may be different so that the multiple layers may be used to control more optical properties of the light modulator. For example, particles in different optical layers may absorb or reflect at different wavelengths, e.g., may have a different color. This can be used to create different colors and/or different color intensities on the panel by controller 46. For example, a four-substrate panel may have three optical layers with different color particles, e.g., cyan, yellow, and magenta, respectively. By controlling the transparency or reflectivity for the different colors, a wide color spectrum may be created.

The surfaces of the substrates that face another substrate may be supplied with two or more patterns, e.g., as in an embodiment. For example, the outer substrates 41 and 43 may receive electrodes only on an inner side, while the inner substrate, e.g., substrate 42, may have electrodes on both sides.

Substrates 41 and 42 may together be regarded as an embodiment of a light modulator. Likewise, substrates 42 and 43 may together be regarded as an embodiment of a light modulator.

One or more of substrates 41, 42, and 43 may be provided with a heating element, e.g., a loop electrode.

**Figure 3c** schematically shows an example of an embodiment of a car 20 having smart glazing for windows 21. This is a particularly advantageous embodiment since, while driving, the level of incident lighting can change often and rapidly. Using smart glazing in a car has the advantage that light levels can be maintained at a constant level by adjusting the transparency of the car windows. Moreover, the reduced diffraction effect improves safety as it reduces driver distraction. Car 20 may comprise a controller configured for controlling the transparency or reflectivity of windows 21. Smart glazing can also be used in other glazing applications, especially where the amount of incident light is variable, e.g., buildings, offices, houses, greenhouses, and skylights. Skylights are windows arranged in the ceiling to allow sunlight to enter the room.

The light modulator may have two optical states, e.g., a transparent state and a non-transparent state, or a non-reflective state and a reflective state. The light modulator, e.g., light modulator 10 or light modulator 40, may be configured to
- switch to the second optical state, e.g., the non-transparent state or to the reflective state by creating an alternating voltage on at least one of the first and second substrates, applying an alternating current between at least a first electrode and a second electrode on the first substrate and/or between a first electrode and a second electrode on the second substrate, and
- switch to the first optical state, e.g., the transparent state or to the non-reflective state by creating an alternating voltage between the first and second substrate, applying an alternating current between a first electrode on the first substrate and a first electrode on the second substrate, and/or between a second electrode on the first substrate and a second electrode on the second substrate.

The electrode pattern on the first substrate is arranged at least in part in the same pattern as a second electrode on the second substrate. Typically, the electrodes oppose each other, but the pattern of the first electrode and second electrode may also be shifted with respect to each other.

A protective coating may be provided on at least a part of the inner surface area of at least one of the first substrate and the second substrate. A driving signal applied to electrodes typically has a varying voltage. For example, a power provider may be operated at an AC frequency for switching to a transparent state or to a non-transparent state. Such a signal may have a frequency between, say, 1-1000 Hz. A balanced electrolysis current may be obtained by continuously switching the polarity of oppositely charged electrodes on the first and on the second substrates and/or between the first and the second substrates.

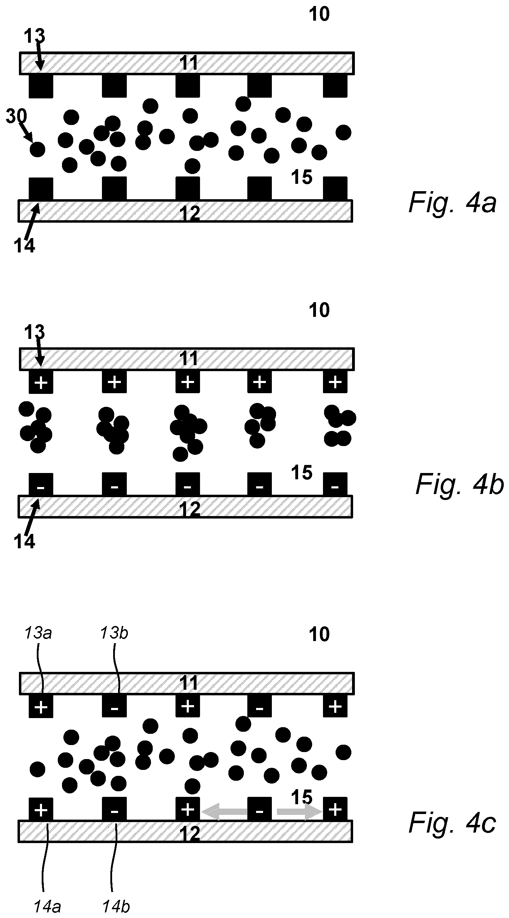

**Figures 4a-4b** schematically show a side view of an embodiment of a light modulator in use. In this figure, only the electrodes are shown. The cross section shows bridging lines and/or extending lines of electrodes in a light modulator according to an embodiment.

Applying an electric field to the electrodes on the substrates causes an electrical force on the particles. Using this effect, the particles can be moved around, and so different transparency or reflectivity states can be caused in the light modulator. A controller may control the electric field, e.g., its amplitude, frequency, and phase. In an embodiment, the controller is connected to at least four electrodes: two for each substrate. But more electrodes may be used and connected to the controller; for example, more than 2 electrodes may be used for a substrate to better fine-tune grayscaling and driving to a non-transparent or reflective state. Multiple electrodes may also be used to support multiple segments on the substrate.

**Figure 4a** shows the light modulator without an electric field being applied. No electric force is yet applied on particles 30 suspended in fluid 15, in figure 4a.

In the configuration shown in figure 4a, a conducting electrode pattern, arranged on the top substrate, is completely or substantially aligned with a conducting electrode pattern on the bottom substrate. The conducting electrode pattern may be deposited on a transparent or (partially) reflective glass substrate or may be embedded in a plastic substrate, etc.

Alignment between the top-electrode pattern and the bottom electrode pattern contributes to a wider range of achievable levels of transparency or reflectivity. However, alignment is not needed, as similar effects can be obtained without alignment. Without alignment, a range of transparency or reflectivity is likewise obtained.

Note that in these examples, reference is made to the top substrate and the bottom substrate to refer to the substrate that is higher or lower on the page. The same substrates could also be referred to, e.g., as the front substrate and back substrate, since in a glazing application, the substrates would be aligned vertically rather than horizontally.

**Figure 4b** shows the light modulator wherein, say at an instance P1, a potential +V1 is applied to each microwire electrode on the top substrate, while a negative voltage, say -V1, is applied to each microwire electrode of the bottom substrate. Thus, in this case, the same positive potential is applied to all electrodes 13, and the same negative potential is applied to electrodes 14. The difference in potential causes negatively charged particles to flow to the vicinity of the electrodes of the top substrate, where the particles will substantially align with the top electrodes. As a result, if both the top and bottom substrates are transparent, the transparency of light modulator 10 will increase. Likewise, if, e.g., the top substrate is transparent and the bottom substrate is reflective, the reflectivity of light modulator 10 will increase. If the solution contains positively charged particles, they will flow to the vicinity of the electrodes of the bottom substrate, where those particles will substantially align with the bottom electrodes.

A similar transparency can be achieved when in a second instance, P2, of the on-state, the voltages of the top electrodes and bottom electrodes are reversed in contrast to the instance of P1. In the instance P2, the voltage of each electrode on the top substrate is now supplied with a negative potential -V1 while the voltages of the aligned electrodes of the bottom substrate are supplied with a positive potential. This state is similar to the state shown in figure 4b, but with top and bottom substrates reversed. In this configuration, the transparency of light modulator 10 is also high. If reflective particles are used, then reflectivity is low.

Interestingly, by switching between a positive potential at electrodes at the top substrate, e.g., as shown as electrodes 13 in figure 4b (and a negative potential on electrodes 14), and a positive potential at electrodes at the bottom substrate, e.g., as shown as electrodes 14 in figure 4b, the transparency or non-reflectivity can be maintained, while decreasing corrosion damage to the electrodes. This alternating electric field can be achieved by applying alternating electric potentials to the top and bottom electrodes.

Applying an AC waveform is optional, but it is a useful measure to increase the lifetime of the light modulator by reducing corrosion. Corrosion can form, for example, when using copper electrodes, since copper ions dissolve in an ionic fluid at one substrate and flow to electrodes on the opposite substrate, where they deposit. By applying a waveform, the direction of copper ion transport is frequently reversed, thus reducing corrosion damage. Between the two instances P1 and P2, the corrosion current between the two substrates is balanced or substantially, e.g., >95%, balanced, e.g., as corrosion rate of an electrode of the top plate occurs, there is a balancing deposition of copper on the bottom electrode between each instance of time, P1, and vice versa in instance P2. Therefore, the particles are transitioning or migrating continuously between top and bottom electrodes, and the light modulator or smart window is always in the on-state while the dynamic electrolysis current between the top and bottom electrodes is constant, thus there is no or a negligible net loss of electrode material on the top and bottom substrates.

**Figure 4c** shows how a state of decreased transparency or increased reflectivity can be obtained. An alternating voltage is applied on the same substrate. For example, in an embodiment, a potential +V2 is applied to a first electrode and the next immediate neighboring electrode has an opposite potential -V2 etc., as shown in fig. 8c. This can be obtained by applying the potential +V2 to electrode 13a and the opposite potential -V2 to electrode 13b. On the opposite substrate, the potential +V2 may be applied to electrode 14a and the opposite potential -V2 to electrode 14b. For example, the electrodes may be arranged so that the electrodes on the substrates are aligned; an electrode on the top substrate having an opposite electrode on the bottom substrate, and vice versa. For example, to decrease transparency or increase reflectivity, the opposite electrode may receive the same potential, while neighboring electrodes receive an opposite potential. An embodiment is shown in figure 4c, wherein four electrodes are indicated with the reference numbers 13a, 13b, 14a, and 14b, and the rest of the electrodes continue to alternate.

By using this AC drive cycle between top and bottom substrates, diagonal and lateral electric fields are generated between the two substrates thereby causing haphazard diffusion of the particles, thereby creating the closed state of the light modulator. As a result of this configuration, the particles migrate diagonally and laterally between the top and bottom substrates and diffusion of particles into the visible aperture of the light modulator contributes to the closed, opaque state of the light modulator.

As for the transparent state shown in figure 4b, a waveform may be applied to the electrodes, e.g., so that electrodes that are shown in figure 4b with a positive potential become negative and vice versa. As in figure 4b applying a waveform, e.g., between electrodes 13a and 13b and between 14a and 14b reduces corrosion damage to the electrodes.

The AC drive cycle may be implemented by using an interdigitated line configuration combining the top and bottom electrode configuration shown in plan view in figures 1a, 1b, 2a-2f, etc.

The extent to which transparency or reflectivity is increased or decreased in figures 4b and 4c depends on the voltage and frequencies difference. By varying the voltage difference, the amount by which the transparency or reflectivity increases, respectively, decreases, is controlled. For example, a curve representing light transmission versus voltage may be determined, e.g., measured. To obtain a particular level of light transmission, e.g., a particular transparency, e.g., a particular grayscale level, the corresponding voltage, e.g., AC voltage may be applied. By interpolating the signals for a transparent or for a non-transparent state, levels in between transparent and non-transparent may be obtained. Likewise, a curve representing light reflection versus voltage may be determined, e.g., measured. To obtain a particular level of reflectivity, the corresponding voltage, e.g., AC voltage may be applied. By interpolating the signals for a reflective or for a non-reflective state, levels in between reflective and non-reflective may be obtained.

Different electrode patterns may be used for a light modulator. The electrode patterns may each provide a range of grayscales, e.g., levels of transparency or reflectivity, that the light modulator can attain. However, the particular range of grayscale for any particular electrode pattern may be different from another electrode pattern. In other words, although different patterns give an increased transparency or reflectivity or an increased opacity, the exact response to a drive signal depends on many factors, including the particular pattern that is used. The variations in the optical properties of a light modulator may have a fine resolution, e.g., below 1 mm. Note that no pixelation of the light modulator is needed to achieve different optical patterns, e.g., logos, visible in the light modulator.

This effect may be used to embed visible images in the light modulator by locally changing the electrode pattern on the substrates of a light modulator. For example, one may locally have grayscales that have a permanent offset in grayscale relative to each other, because of a different electrode pattern. For example, by locally changing the electrode pattern or its pitch, the maximum transparency or reflectivity can be altered.

The result is an area on the light modulator which has a different intensity of grayscale, e.g., a different grayscale, or of coloring. The area may have the same color point, though. In an embodiment, they may switch together with the rest of the window, although at a different rate. For example, even if the same voltage is applied to the electrodes in two different areas, they cause a different transparency state, e.g., different transmission level, due to different electrode patterns. For example, a curve representing transmission versus voltage may be shifted. For example, if voltage control is changed in the same way in both areas, then in both areas light transmission may change, but with a different amount. An area may also be made less responsive to a drive signal by reducing the density of electrodes; in particular, an area may be made not to switch at all, e.g., by not applying electrodes in the area.

For example, the electrode material may be copper, aluminum, gold, indium-tin oxide (ITO), etc. ITO is transparent while Cu/Al is reflective, thus using a different electrode material, a different appearance may be obtained, irrespective of the voltage driving. Likewise, different materials with different resistance will give rise to a different electric field. For example, ITO will have a smaller electric field, even though driven with the same voltage.

An embodiment of a method of modulating light comprises applying an electric potential to multiple electrodes applied to two opposing substrates according to an embodiment to obtain an electric field between the multiple electrodes providing electrophoretic movement of the particles towards or from one of the multiple electrodes causing modulation of light shining through the substrates, wherein the two opposing substrates are as in an embodiment.

Various modes of operation are supported by an embodiment of a four-electrode light modulator system.

### Horizontal drive

Horizontal drive is a mode in which lateral electric fields are created along the substrate. The light modulator may apply an alternating voltage on the interdigitated electrodes to cause the particles in the optical layer to move parallel to the substrate, thus decreasing transparency.

### Vertical drive

Vertical drive is a mode in which particles are aligned orthogonally to the substrates. Electrodes opposite to each other on opposite substrates receive a different voltage.

### Maintaining a grayscale

The light modulator drive system may apply 0 voltage on the electrodes most of the time, but if the grayscale is dropping due to the particles dispersing, then briefly the electrodes and may be driven as in vertical drive.

In all three modes, the driving may use DC or AC signals. Preferably, AC signals are used.

To transition from transparent to opaque, a horizontal drive can be applied on the light modulator. But the more viscous the optical layer, the more electrical energy is required. To limit such problems, one solution is to integrate a heating function in the light modulator. By modifying the electrode design, e.g., by to ensuring electrode lines stretching over the substrate are contacted at both ends, it becomes possible to use an electrode in two ways: as regular light modulator driving generate electric fields, or to pass current in the electrodes to locally heat the ink.

The ability to use an electrode to heat the ink has various advantages. Operations become faster, in particular when the ambient temperature is low and the ink has a high viscosity, then heating will make a substantial difference. Especially, the transition from clear to dark is accelerated as the diffusion rate of particles will be stronger. In an embodiment, the heating capacity in the light modulator may even be used to heat outside the light modulator. This last option is especially advantageous for windows.

**Figures 5a-5c** schematically shows an example of an embodiment of a substrate 500. **Figures 5g.1****, 5g.2** and **5g.3** schematically show examples of embodiments of light modulators that may employ at least one of substrates of the type shown in figures 5a-5c.

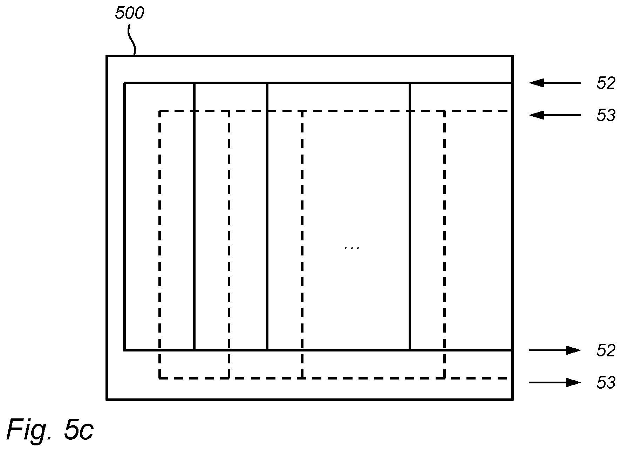

Substrate 500 comprise a first electrode 52 and a second electrode 53, e.g., the electrodes are attached to a surface of substrate 500, e.g., a surface arranged to face the optical layer of a light modulator. For clarity figure 5a shows only electrode 52 and figure 5b shows only electrode 53. Figure 5c shows both electrodes 52 and 53.

Substrate 500 comprises a first electrode 52, which is shown in figure 5a. The electrode comprises a loop stretching across the surface of substrate 500; e.g., the surface arranged to face the optical layer in a light modulator embodiment. For example, the loop part of first electrode 52 may comprise an electrode line 511, a bridging electrode line 521, and an electrode line 512. Lines 511, 521 and 512 are connected to form the loop. The loop is arranged to support the flow of an electrical current into and out of the loop to induce heating across the substrate. For example, a current may be passed into the loop at line 512, and exit the loop at line 511. The loop as shown here is constructed from three line segments, but in an embodiment, the loop may be more convoluted; for example, instead of straight line segments the loop may comprise wavy or zigzagging lines, e.g., to cover a larger part of the surface and/or to increase the electrode length and/or to reduce diffraction effects. In an embodiment, the bridging lines are contained within the loop.

In an embodiment, the loop stretches along the periphery of the substrate; this is shown in figure 5a. For example, the loop may stretch along the periphery but also convolute, e.g., have wavy parts, e.g., a wavy part stretching over part of the surface, while the loop as a whole still extends along the surface periphery.

Electrode 52 further comprises a series of conductive bridging lines, which are arranged in the loop. Shown in figure 5a are bridging lines 521-524. There may be fewer than 4 bridging lines, e.g., 2 or 3, but typically there are more than four bridging lines. A bridging line connects from one point of the loop to another point of the loop.

In an embodiment, the bridging lines may be arranged in a parallel,

In an embodiment, the bridging lines may span between opposites edges of the loop. The loop and bridging lines may have a ladder-structure.

For example, the loop may comprise a first consecutive portion, e.g., electrode line 512, a second consecutive portion, e.g., electrode line 511, and one of the bridging electrode lines, e.g., electrode line 512. Each of the bridging lines in the series may then extend between the first consecutive portion and the second consecutive portion. For example, bridging lines 521-524 as shown, each extend between a point on line 512 and a point on line 511. Moreover, the bridging electrode lines do not cross each other.

For example, the first and second consecutive portion may each extend along an edge of the substate.

The series of bridging lines are arranged to create an electric field in the optical layer of a light modulator. For example, a voltage may be arranged on the loop, causing an electric field in the optical layer. For example, the voltage may be modulated to modulate the electric field in the optical layer.

For example, as show, the bridging lines may be arranged so that they do not cross each other; a non-crossing arrangement helps a so-called horizontal drive, arranged between the first and second electrode. The bridging lines may also contribute to heating of the optical layer. The bridging lines may stretch across the substrate. For example, the area covered by the loop and bridging lines may extend across the substrate. For example, the area covered may be at least 75% of the surface are, more preferably at least 80%, more preferably at least 90%.

In an embodiment, a light modulator comprising a substrate with first electrode 52 may use the electrode to increase the temperature in the optical layer by flowing an electrical current through a loop of the at least one electrode on the first substrate. This will also have the effect to diffuse particles in the optical layer, which will then, e.g., decrease transparency and/or increase reflexivity. This enables a low-cost manufacturing of a heating function.

Using only heat to increase diffusion of the particles is possible, but to improve this transition, preferably, a second electrode is arranged on the surface, enabling a horizontal drive. Using a horizontal drive in addition to heat based diffusion improves the ability to control the speed and homogeneity of the transition.

Accordingly, in an embodiment, substrate 500 further comprises a second electrode 53, which is shown in figure 5b. The second electrode may be similar to the first electrode, e.g., comprising a loop with multiple bridging electrode lines. The same variants as discussed for first electrode 52 also apply to second electrode 53. Second electrode 53 may have the same shape as first electrode 52, e.g., the two shapes may be congruent, but this is not at all necessary, as shown in various examples herein. The second electrode may be the same or of a different type, e.g., as shown elsewhere herein The second electrode may, for example, not comprise a loop, e.g., be of comb type.

A second electrode is optional, for example, substrate 500 may only comprise first electrode 52, but not second electrode 53.

In the embodiment shown, second electrode 53 comprises a loop stretching across the same surface of substrate 500. For example, the loop part of second electrode 53 may comprise an electrode line 531, a bridging electrode line 541, and an electrode line 532. Lines 531, 541 and 532 are connected to form the loop. The loop is arranged to support the flow of an electrical current into and out of the loop to induce heating across the substrate. For example, a current may be passed into the loop at line 532, and exit the loop at line 531, or vice versa. Second electrode 53 may be arranged in several variations, e.g., the same or similar as for first electrode 52. Second electrode 53 may comprise wavy lines, may stretch along the periphery, and so on.

Second electrode 53 comprises a series of conductive bridging lines; shown in figure 5b are bridging lines 541-544. The number of bridging lines is only exemplary.

Like first electrode 52, also the bridging lines of second electrode 53 are arranged to create an electric field in the optical layer of a light modulator. In an embodiment, the bridging lines of electrode 53 do not cross each other.

In an embodiment, first electrode 52 and second electrode 53 could use the same design but shifted with respect to each other on the substrate. This provides a straightforward way to arrange the first electrode 52 and second electrode 53 on the substrate, though many other ways to arrange first electrode 52 and second electrode 53 on a substrate are possible; other options to arrange first electrode 52 and second electrode 53are shown herein.

In the design shown in figures 5a-5c, the first electrode 52 and second electrode 53 are identical in a plan view, except that they two electrodes are shifted with respect to each other. For example, second electrode 53 may be placed on substrate 500 with a displacement 534 and a displacement 533 with respect to first electrode 52. Displacement 534 and displacement 533 may be orthogonal. In the example shown, the displacement 534 is orthogonal to bridging electrode line 521, and in this case as the bridging lines are drawn parallel, also to the other bridging lines; For example, displacement 534 may be parallel to electrode lines 512 and/or 511.

In the example shown, the displacement 533 is orthogonal to electrode lines 512 and/or 511; For example, displacement 533 may be parallel to bridging electrode line 521, and in this case as the bridging lines are drawn parallel, also to the other bridging lines. For example, second electrode 53 may be diagonally shifted with respect to first electrode 52.

Although using displacements provides an easy way to arrange the electrodes, at least where the two electrodes cross an isolation may be inserted between them to avoid a short-cut.

In an embodiment, the bridging electrode lines of first electrode 52 alternate on the surface with the bridging electrode lines of the second electrode 53. This may be achieved by the displacement method shown in figure 5b.

Various possibilities exist to use an electrode comprising a loop and a series of bridging electrode lines in a light modulator. For example, a light modulator may comprise a first substrate, and a second substrate arranged opposite the first substrate. The first substrate comprises at least one electrode extending across it according to an embodiment.

The light modulator comprises an optical layer extending between the first and second substrate. The optical layer comprising a fluid 15 that comprises particles 30. The light modulator is configured to apply an electric potential to the at least one electrode causing modulation of an electric field in the optical layer providing electrophoretic and/or dielectrophoretic movement of the particles in the optical layer causing modulation of light passing through the substrates.

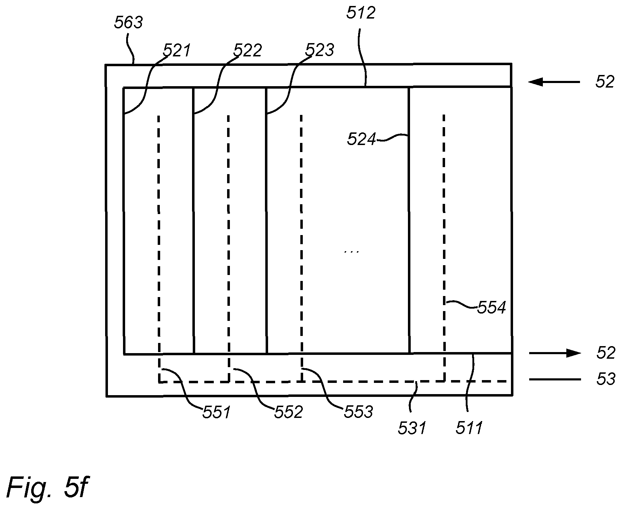

On the first substrate there may be one, two, or more electrodes, at least one of which is according to an embodiment, e.g., comprising a loop and bridging electrode lines. In an embodiment, an electrode may be of comb type, comprising an electrode line with a series of extending lines. In such an electrode, the electrode line does not connect to form a loop, the extending lines connect on one end to the electrode lines, but do not connect on the other end. A loop type electrode may also comprise a series of extending electrode lines. For example, the top substrate in figure 5g.2 shows two interdigitated electrodes of comb type. Also figure 5f shows an electrode of comb type. An electrode of comb type does not comprise a loop, instead it comprises an electrode line connected to a series of conductive extending electrode lines, each extending line connecting from one endpoint of the electrode line, while the other endpoint of the electrode lines is not connected. The series of extending lines are arranged to create the electric field.

**Figure 5c** schematically shows an example of an embodiment of substrate 500 showing both first electrode 52 and second electrode 53.

In the example of figure 5c, substrate 500 comprises two electrodes, both of which are of loop type. That is a substrate 500 comprises two electrodes, each of which comprises a loop, and a series of conductive bridging lines.

Substrate 500 may have more than two electrodes. Further electrodes may be of loop type or of comb type (e.g., without a loop).

Substrate 500 of figure 5c comprises a first electrode 52 and a second electrode 53. The first electrode and second electrode each comprise a loop stretching across the surface. The first electrode and second electrode each comprise a series of bridging electrode lines.

The series of bridging lines of first electrode 52 interdigitate with the series of bridging lines of the second electrode 53; e.g., the series of bridging lines of first electrode 52 alternate on the surface of substrate 500 with the series of bridging lines of the second electrode 53.

The electrodes line in the electrodes of substrate 500, e.g., first electrode 52 and second electrode 53 may cross each other. As shown, the electrodes have a ladder shape, in which the bridging lines are arranged between two main electrodes lines. The bridging lines of one electrode may cross a main electrodes line of the other electrode.

To support the crossings of the first electrode 52 and the second electrode 53 without causing short circuits, several strategies can be employed. In an embodiment, a dielectric material is arranged between the first electrode and the second electrode at least at the points where they cross on the substrate. This dielectric material acts as an insulator, preventing electrical contact between the electrodes and thus avoiding short circuits. For example, dielectric material may be arranged only at crossing points where electrodes cross. Another option is to arrange a dielectric sheet between the first electrode and the second electrode. This sheet provides a physical barrier that ensures electrical isolation between the crossing points of the electrodes. Both methods prevent short circuits by maintaining separation between the conductive elements of the electrodes.

Additionally, employing different layers for the electrodes can reduce the risk of short circuits. In this approach, the first electrode can be manufactured in one layer, while the second electrode is manufactured in a separate layer. The layers can be electrically isolated from each other using an insulating layer or dielectric material. Photolithography may be used to define the electrodes on their respective layers. By ensuring that each electrode resides in its own layer and is separated by dielectric materials or insulating layers, the risk of short circuits at the crossing points is avoided or at least reduced.

For example, in an embodiment of a light modulator, a first electrode is arranged in a first layer, followed by a dielectric layer, followed second electrode arranged in a second layer. The first electrode and/or second electrode may be mesh electrodes. When current flows through the first electrode and/or second electrode a potential is created. The potential may be used to control movement of particles in the optical layer. Note that it is possible to use the same electrodes for optical control of the light modulator as well as for control of temperature, without needing additional electrode lines.

Any one of the loop electrodes on substrate 500 may be used to heat the optical layer. In an embodiment, two or more loop electrodes are used at the same time to heat the optical layer, e.g., by flowing current through two or more of the loops. Arrows in figure 5c indicate a possible direction for the current flow, though the current flow direction may be reversed for either or both of electrodes 52 and 53.

Figure 5c shows only the electrodes on one substrate. For example, substrate 500 may be the top or bottom substrate in a light modulator. In an embodiment, the electrodes on the other substrate may be the same and aligned with those on the opposite substrate.

To transition from a dark to a clear state a vertical (top/bottom) voltage may be applied. To transition from a clear state to a dark state, a horizontal voltage may be applied between the first and second electrode on the bottom substrate and/or the top substrate.

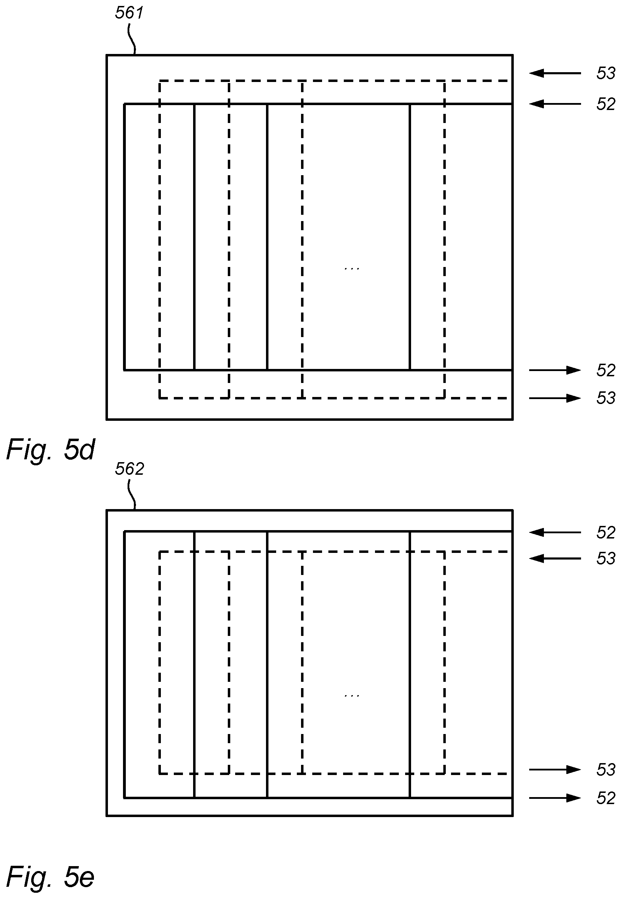

**Figures 5d and 5e** schematically shows an example of an embodiment of a substrate: substrate 561 and substrate 562 respectively. Like figure 5c, these substrates comprise two electrodes of loop type.

Substrates 561 and 562 each comprise a first electrode 52 and a second electrode 53, each of which comprises a loop, and a series of conductive bridging lines. The series of bridging lines of first electrode 52 interdigitate with the series of bridging lines of the second electrode 53.

The arrangement of the electrodes is different from figure 5c though. Instead of translating the design of one electrode to obtain that of the second electrode, a different approach is used. Both electrodes of figures 5d and 5e show a ladder design, in which the bridging lines are arranged between two main electrodes lines.

In figures 5d and 5e the main electrode lines of one electrode are arranged inside the electrode lines of another electrode. In case of figure 5d, the main electrode lines of first electrode 52 are arranged inside the electrode lines of second electrode 53. In case of figure 5e, the main electrode lines of second electrode 53 are arranged inside the electrode lines of first electrode 52.

In figure 5d the inner electrode, here electrode 52, extends to the edge of substrate 561 beyond the outermost bridging electrode line of the outer electrode, here electrode 53. In figure 5e the outer electrode, here electrode 52, extends to the edge of substrate 562 beyond the outermost bridging electrode line of the inner electrode, here electrode 53. In figure 5e, the inner loop is contained within the outer loop.

**Figure 5f** schematically shows an example of an embodiment of substrate 563.

Substrate 563 comprises an electrode of loop type, first electrode 52. Electrode 52 comprises two electrode lines: electrode line 511, and electrode line 512. Between the two electrode lines a series of conductive bridging electrode lines is arranged; shown are bridging electrode lines 521-524.

Substrate 563 comprises an electrode of comb type, second electrode 53. Electrode 53 comprises one electrode line: electrode line 531. Extending from electrode line 531 are a series of conductive extending electrode lines; shown are extending electrode line 551-554. Electrode 53 of figure 5f does not contain a loop.

The bridging electrode lines and extending electrode line interdigitate. As shown in figure 5f the bridging electrode lines and extending electrode line interdigitate alternate on substrate 563.

First electrode 52 is arranged for the flow of an electrical current into and out of the loop to induce heating across the substrate. This is illustrated in figure 5f with arrows, to show a possible direction of current; the flow of current could be in the opposite direction as indicated. First electrode 52 including the series of conductive bridging lines is arranged to create an electric field. This could be an electric field causing a horizontal drive, or a vertical drive.

Second electrode 53 is not arranged for the flow of an electrical current, as it does not comprise a loop. This is illustrated in figure 5f with a line rather than an arrow. However, second electrode 5 including the series of conductive extending lines is arranged to create an electric field. This could be an electric field causing a horizontal drive, or a vertical drive. Combining an electrode of loop type with an electrode of comb type may need fewer crossings than combining an electrode of loop type with an electrode of loop type.

In a light modulator, a first substrate with at least one electrode of loop type is combined with a second substrate. The second substrate may have one or more electrodes, which may be zero or more electrodes of loop types and/or zero or more electrodes of comb type. Although having no electrodes on the second substrate is possible, e.g., by using two or more electrodes on the first substrate, a preferred embodiment uses electrodes on both substrates, e.g., aligned electrodes lines. In a preferred embodiment, at least two electrodes on the first substrate are combined with at least two electrodes on the second substrate, referred to herein as a four-electrode design. In an embodiment, the first substrate and second substrate together have at least two electrodes.

It is possible to combine two or more electrodes on one substrate with one electrode on the other substrate; the one substrate on the other substrate may be of loop type, e.g., as shown in figure 6a, may be of comb type, e.g., as electrode 53 in figure 5f, or may be of sheet type, e.g., as electrode 505 in substrate 504 of figure 5g.3. Various options are possible. For example, a substrate may have one electrode which may be of comb or loop type, or two electrodes, e.g., two of loop type, or two of comb type, or one of either type.

**Figure 5g.1** schematically shows an example of an embodiment of a light modulator 501,

In the example of figure 5g.1, each substrate comprises at least two electrodes, which are both of loop type; a bottom substrate and a top substrate may each comprise two or more electrodes, each of which comprises a loop. For example, both substrates in light modulator 501 may be of the type shown in figure 5c, e.g., substrate 500. Electrode lines on one substrate are aligned with electrode lines on the opposite surface, furthermore both electrode lines face an optical layer between the substrates. The optical layer extends between the two substrates. The two substrates in a light modulator are sometimes referred to as the top substrate and the bottom substrates, as the light modulator is typically shown horizontally in the figures. Of course in use, the light modulator will typically be in an upright position, e.g., to function as glazing.

The optical layer may comprise a fluid 15, e.g., a liquid, that comprises particles 30. The light modulator is configured to apply an electric potential to the at least one electrode causing modulation of an electric field in the optical layer providing electrophoretic and/or dielectrophoretic movement of the particles in the optical layer causing modulation of light passing through the substrates.

Although in this embodiment the same electrode design is used for both substrates, the designs are mirrored with respect to each other so that electrode lines align with the corresponding electrode line counterpart on the other substrate.

Figure 5g.1 shows a four-electrode system, e.g., having two electrodes on each substrate, or more generally, at least two electrodes on each substrate. Four-electrode system are preferred, as it allows horizontal driving on both substrates, but they are not the only options. For example, in an embodiment, at least one or both of the substrates contains three electrodes.

**Figure 5g.2** schematically shows an example of an embodiment of a light modulator. In this example, a substrate 500, e.g., as shown in figure 5c is combined with a substrate 506. Substrate 506 comprises two electrodes of comb type, e.g., such as electrode 53 in figure 5f.

**Figure 5g.3** schematically shows an example of an embodiment of a light modulator 503. In this example, a substrate 500, e.g., as shown in figure 5c is combined with a substrate 504. Substrate 504 comprises one surface electrode 505. Using a single electrode, in this case of surface type, e.g., a sheet electrode, allows vertical driving between the two substrates. It also allows horizontal driving at the bottom substrate 500, but does not allow horizontal driving at top substrate 504. Nevertheless, still a transition from clear to dark is possible, especially if the heating effect of the loop electrode on the bottom substrate is used.

Various variants are possible. For example, in any one of figures 5g.1, 5g.2, and 5g.3 the bottom substrate 500 may be replaced by any of its variants, e.g., those shown in figures 5d, 5e, and in particular 5f. The bottom substrate may have two or more electrodes, at least one of which is of loop type.

Various further variants exist.

For example, in an embodiment, a first substrate comprises a single electrode of loop type, and a second substrate two electrodes of comb type. This embodiment has the advantage of needing no crossings, while still having a heating function as well as horizontal driving.

For example, in an embodiment, a first substrate comprises a combination of one comb type electrode and one loop type electrode, and a second substrate comprises two electrodes of comb type. This embodiment has the advantage of allowing horizontal drive on both substrates, as well as a heating function, while still reducing crossings.

For example, in an embodiment, a first substrate comprises a combination of one comb type electrode and one loop type electrode, and a second substrate also comprises a combination of one comb type electrode and one loop type electrode. This embodiment has the advantage of using the same design for both substrates. Furthermore, a loop electrode on both substrates allows for more homogeneous heating of the optical layer.

For example, in an embodiment, a first substrate comprises two electrodes of loop type, and a second substrate comprises two electrodes of comb type. This embodiment has the advantage of stronger heating due to two loop type electrodes while also having a substrate that needs no crossings.

Various other combinations are possible with the corresponding advantages.

### Light modulator operation

An optical layer extends between the first and second substrate, e.g., between top and bottom substrate. The optical layer comprises a fluid 15 that comprises particles 30. The light modulator is configured to apply an electric potential to the at least one of the electrodes on the first or second substrate causing modulation of an electric field in the optical layer providing electrophoretic and/or dielectrophoretic movement of the particles in the optical layer. This in turn causes modulation of light passing through the substrates. It may also cause modulation of light incident with the substrates, e.g., in case of reflective particles.

The at least one loop electrode may be used to accelerate dispersion of the particles in the fluid by heating across the substrate. In particular, faster operations can be obtained for fluids, e.g., ink, at low temperature where the ink is high in viscosity. For example, an ink with a viscosity of 100mPa.s or higher may be operated faster by increasing temperature. In an embodiment, the light modulator or a controller of the light modulator is arranged to flow an electrical current into and out of the loop to induce heating across the substrate.

Generally speaking there are several ways to operate the light modulator. In one way, before driving the light modulator into a different optical state, one or more or all of the loop electrodes may be used to heat the optical layer during a heating period. The heating period is followed by a driving period. During the driving period, the electrodes may be driven as usual. For example, during the heating period a current may flow in at least one loop electrode, while during the driving period substantially no current flows through the electrodes, but a voltage is placed on the electrodes. The voltages on the electrodes are chosen so that the desired transition takes place, and this can be a conventional driving method. Having a separate heating period and driving period is attractive as it allows one to use an existing light modulator, with optimized driving cycles and adapt it to use one or more loop electrodes. The existing transition programs may be used, though they proceed faster as the ink is heated during the heating period.

In a second way, the heating and driving are combined. In such embodiments, the electrodes both show a current, thus causing a heating effect, and at the same time a voltage, thus effecting the electric field and in turn the optical properties of the light modulator. This approach is more challenging as current and voltage must be controlled at the same time.

In an embodiment, the light modulator is configured to apply direct current (DC) signals on one, or more, or all loop electrodes on at least the first substrate, and/or on the first and second substrate. The DC driving method allows for achieving a controllable heating effect without influencing the optical driving signals. By floating all optical control signals up with a DC signal for heating, the method isolates the heating effect from the optical modulation driving. In this way, conventional DC driving may be used to which a heating component is added. This allows both precise thermal control as well as optical control. To avoid electrolysis the direction of the DC signals may be periodically reversed.

In an embodiment, the light modulator is configured to apply alternating current (AC) signals on one, or more, or all loop electrodes on at least the first substrate, and/or on the first and second substrate. When using AC driving signals, one approach to combine temperature control with optical control is also to float up all conventional AC optical signals with an amount to increase heating. In AC controlling this approach may influence the grey scale that is achieved by the AC optical signals; that is the optical effect by using a conventional driving signal may become different when the same conventional driving signal is floated upwards to increase heating. There are various ways to deal with this effect. In a simple embodiment, the effect may be ignored, an effect would be that the exact grey scale achieved in the light modulator may differ somewhat, depending on the heating used during the transition. An alternative way is to take the effect into account in the control loop. For example, driving of the light modulator may include a control loop in which AC driving parameters are dynamically adjusted to achieve the desired optical effect. For example, the control loop, e.g., a feedback loop, may estimate the current optical effect from current measurements in the electrodes, or from an optical sensor integrated in the light modulator. Yet another approach is to avoid a dynamic control loop, driving signals may be obtained taking into account a current and desired state of the light modulator, e.g., a current and desired optical state, and a temperature, e.g., an estimated fluid temperature. The driving signals may for example be computed or retrieved from a look-up table. AC driving that includes temperature control directly is more complicated but has the advantage of further reducing electrolysis problems.

In an embodiment, temperature, e.g., in the optical layer, is measured and/or estimated, e.g., by measuring resistance in a loop electrode, driving of the light modulator is controlled in a control loop which receives the measured temperature as an input.

For example, the control loop may adjust the various potentials and currents on the two or more electrodes to maintain or drive to a target current and/or a target potential through or between the two or more electrodes. The target current and/or a target potential may define a desired target level of gray scale. The additional electric fields caused by applying the heating voltage or current to the two or more electrodes, (or to heat an additional dedicated heating electrodes) may impact the distribution of particles within the optical field as it changes the electric field. As the particles within the optical field change so will current and/or potential through or between the two or more electrodes, and accordingly, the additional heating voltage or current will be compensated by the control loop. The control loop may act by modifying the potentials and/or currents on the electrodes where the heating current is applied and/or on the other electrodes of the modulator on which the heating currents/potential are not applied.

The control loop may use as input current and potential measured at each controlled electrode, typically all electrodes. The above description for two electrodes, e.g., two electrodes on the same substrate, or two opposite electrodes, can be adapted to more electrodes, e.g., full control over all electrodes.

The two approaches may be combined. For example, a combined heating and driving embodiment may be used until the optical layer is sufficiently heated after which an only-driving period is used, without additional heating effect. For example, a heating period, without driving may be used, followed by a driving+heating period, possibly followed by a driving only period.

In an embodiment, the light modulator comprises a temperature sensor configured to measure at least one of an outside temperature, inside temperature, and a fluid temperature in the optical layer. The light modulator or a controller thereof may be configured to receive a temperature signal from the temperature sensor, and used to determine a current and/or voltage from the temperature signal.

In an embodiment, the temperature can be measured on the outside or inside of a light modulator substrate using an electrode, e.g., a separate conductive track, e.g., a metal track. Temperature may be estimated from measurements on an electrode in the light modulator. For example, electrical resistance in the electrode may be measured; temperature may be determined from the measurement, e.g., from the electrical resistance. Sensing temperature may use the electrodes for temperature control and/or for optical control; note that these may be the same electrode. Alternatively, other temperature measurement techniques such as thermocouples, thermistors, infrared sensors, or semiconductor temperature sensors may be used.

Temperature measurement using an electrode is well suited for measuring temperature inside the optical layer as electrodes are arranged there for temperature and/or optical control. Outside temperature may be measured using a temperature sensor on the outside of the light modulator.

Outside and/or inside temperature may be used to estimate fluid temperature. For example, a desired amount of heating of the optical layer may be computed from the temperature signal. For example, a duration and/or intensity of a heating period may be computed from the temperature signal. For example, if the fluid temperature, or estimated fluid temperature, is low, an increased heating may be used. In an embodiment, a driving signal for the electrodes is derived from the temperature signal, the driving signal indicating a current, a voltage, or both for at least one of the electrodes, e.g., for all of the electrodes. The driving signal may also indicate a control signal for an electronic component (see below).

To align particles with electrode lines, e.g., to increase transparency, and/or decrease reflectiveness, a vertical drive may be used. In an embodiment, first a heating period is used to heat the optical layer, followed by a driving period. For the driving period
a conventional driving mechanism may be used. For example, all electrodes on one substrate may be driven at a first voltage while all electrodes on other substrate may be driven at a second voltage different from the first. This causes charged particles to align under the electrophoretic effect.

If both loop and comb electrodes are used, then only loop electrode(s) are used during the heating period, while during the driving period all electrodes may be used.

**Figure 5h** schematically shows an example of an embodiment of a loop electrode with an electronic component 564. Electronic component 564 may be configured to receive a control signal 565, e.g., from the light modulator or a controller thereof.

Electronic component 564 may be configured to selectively interrupt the electrode. This allows control over current flow and voltage application across the electrode. For example, when activated by control signal 565, component 564 can either establish a conductive path, permitting current to flow through the electrode for heating purposes, or it can open the circuit, preventing current flow and allowing a voltage to be applied to create an electric field.

For example, electronic component 564 may comprise a transistor, a switch, or a relay that enables the selective activation of either current flow or voltage application across the electrode. When the control signal 565 is applied, it determines the mode of operation for the electrode.

For example, the electronic component 564 may comprise a field-effect transistor (FET). In this configuration, the gate of the FET can be controlled by the control signal 565. When the gate voltage is at a specific level, the FET allows current to flow between its source and drain terminals, enabling the electrode to conduct current and heat the substrate. Conversely, when the gate voltage is at another level, the FET blocks the current flow, allowing only a voltage to be applied across the electrode, thereby creating an electric field.

Alternatively, the electronic component 564 may comprise a relay. When the control signal 565 activates the relay, it closes a circuit that allows current to flow through the electrode. When the control signal deactivates the relay, the circuit opens, preventing current flow and enabling a voltage to be applied.

A switching component may be used to switch between a heating period and a driving period. For example, it may be used to selectively cause an electrical current to flow through the loop or to establish an electric potential on the loop.

Another way to align particles with electrode lines, e.g., to increase transparency, and/or decrease reflectiveness, obtaining a vertical drive, combined heating and driving. For example, a different current may be used for the two substrates causing a different voltage for the two substrates, thus obtaining a vertical driving and heating effect at the same time. In this approach an electrical current is caused to flow through the loop while at the same time a desired electric potential is established on the loop. If comb electrodes are used they can be driven at the same voltage as is obtained in the loop electrodes.

To disperse the particles, e.g., to decrease transparency and/or to increase reflexivity, again several approaches are possible. A heating period may be used during which an electrical current is flowed through at least one loop electrode. This will of itself have a dispersing effect, and in fact one could rely entirely on the heating to obtain dispersement of the particles. The heating period may be followed by a driving period in which the electric field is used to further disperse the particles. For example, a horizontal drive may be used. For example, during the heating period, a switching component in the electrodes may configure the electrodes for heating, while during a driving period the switching component in the electrodes may configure the electrodes for driving. For example, in an embodiment, a heating period is followed by a driving period, during the latter horizontal driving is used to disperse the particles. The latter could be a conventional horizontal driving.

Another approach may be to combine heating and driving. In this approach, a different current is used for electrodes on the same substrate. For example, for substrate 500 shown in figure 5c, a first current may be applied to first electrode 52, and a second current to second electrode 53. As a result of using different currents, also different voltages are obtained on the electrodes. The interdigitated bridging lines will have a different voltage and thus a horizontal drive is obtained.

Embodiments in which heating and driving are combined may be facilitated by including an electronic component 564 in the loop, as shown in figure 5h. Electronic component 564 may be configured to receive a control signal 565, e.g., from the light modulator or a controller thereof. However, instead of using a switching component to selectively switch between heating and driving, a current-voltage controller may be used.

Electronic component 564 can be a variety of devices designed to control the current and voltage independently within the electrode, or at least to some extent.

For example, electronic component 564 may comprise a controlled variable resistor, e.g., a digitally controlled variable resistor. A controlled variable resistor can be included in the loop electrode to adjust the current flow. By varying the resistance, e.g., digitally, the current through the electrode can be controlled, e.g., while maintaining a constant voltage. The digitally controlled variable resistor may receive control signal 565 to adjust its resistance, enabling control over the current and voltage characteristics within the loop electrode. If AC current is used, a digitally controlled variable impedance may be used.

For example, electronic component 564 may comprise a transistor, e.g., MOSFET: A transistor, such as a MOSFET (Metal-Oxide-Semiconductor Field-Effect Transistor), can be used to switch and regulate the current flow through the electrode. The gate of the MOSFET can receive a control signal 565, which adjusts the current flowing between the drain and source, allowing control over the current and voltage; e.g., to increase or decrease current without significantly affecting the voltage or vice versa.

In these examples, the control signal 565 can be dynamically adjusted based on the requirements of the heating and electric field generation. For instance, if the substrate requires a higher temperature, the current can be increased by adjusting the resistance or the transistor's gate voltage. Conversely, if a stronger electric field is needed, the voltage can be increased while keeping the current at a manageable level. This allows heating and driving at the same time.

In an embodiment, one substrate of a light modulator comprises exactly one electrode. In an embodiment, both substrates of a light modulator comprise exactly one electrode each.

**Figure 6a** schematically shows an example of an embodiment of a substrate 600. Substrate 600 comprises a single electrode 62. Electrode 62 is of loop type and comprises two electrode lines: electrode line 611 and electrode line 612. Electrode 62 comprises a series of conductive bridging electrode lines; shown are bridging electrode lines 621-624. Each bridging electrode line extends between electrode line 611 and electrode line 612. The bridging electrode lines do not cross each other.

**Figure 6b** schematically shows an example of an embodiment of a light modulator comprising two substrates 600 as shown in figure 6a. In this embodiment, light modulator contains only one electrode per substrate. An optical layer extends between the two substrates, having a fluid 15 and particles 30.

Transitions to decrease transparency, and/or increase reflectivity may be done solely by local heating and the subsequent natural pigment spreading. Transitions in the other direction, may use vertical driving between the two substrates in a driving period. Possibly a heating period is used before the driving period.

As only one electrode is used, no interdigitation is needed. As crossings are avoided, this design decreases costs.

**Figure 7** schematically shows an example of an embodiment of an electrode arrangement. The electrode arrangement comprises two electrodes. A first electrode comprises two main electrode lines 110, at opposite ends of the substrate. Bridging lines connect the two electrode lines 110. A second electrode comprises two main electrode lines 120, at opposite ends of the substrate. Bridging lines connect the two electrode lines 120. Note that the bridging lines are convoluted, and curved.

Furthermore, in this example, extending lines are attached to the bridging lines. This embodiment has two loop type electrodes, and may be used for heating the optical layer, with the corresponding advantage of accelerated transitions. On the other hand, by using curved electrodes diffraction is reduced. Also the extending electrode lines attached to the bridging lines help reduce diffractions, especially by using curved extending electrode lines.

**Figure 8** schematically shows an example of an embodiment of a method for a light modulator 700. The light modulator method may be used for an embodiment of a light modulator as described herein. The method comprises
- applying (710) an electric potential to the at least one electrode causing modulation of an electric field in the optical layer providing electrophoretic and/or dielectrophoretic movement of the particles in the optical layer causing modulation of light passing through the substrates, wherein
- inducing heating across the substrate, by applying (720) an electrical current into and out of the loop.

Many different ways of executing the method are possible, as will be apparent to a person skilled in the art. For example, the order of the steps can be performed in the shown order, but the order of the steps can be varied or some steps may be executed in parallel. Moreover, in between steps other method steps may be inserted. The inserted steps may represent refinements of the method such as described herein, or may be unrelated to the method. For example, some steps may be executed, at least partially, in parallel. Moreover, a given step may not have finished completely before a next step is started.

Embodiments of the method may be executed using software, which comprises instructions for causing a processor system to perform method 700. Software may only include those steps taken by a particular sub-entity of the system. The software may be stored in a suitable storage medium, such as a hard disk, a floppy, a memory, an optical disc, etc. The software may be sent as a signal along a wire, or wireless, or using a data network, e.g., the Internet. The software may be made available for download and/or for remote usage on a server. Embodiments of the method may be executed using a bitstream arranged to configure programmable logic, e.g., a field-programmable gate array (FPGA), to perform the method.

It will be appreciated that the presently disclosed subject matter also extends to computer programs, particularly computer programs on or in a carrier, adapted for putting the presently disclosed subject matter into practice. The program may be in the form of source code, object code, a code intermediate source, and object code such as partially compiled form, or in any other form suitable for use in the implementation of an embodiment of the method. An embodiment relating to a computer program product comprises computer executable instructions corresponding to each of the processing steps of at least one of the methods set forth. These instructions may be subdivided into subroutines and/or be stored in one or more files that may be linked statically or dynamically. Another embodiment relating to a computer program product comprises computer executable instructions corresponding to each of the devices, units and/or parts of at least one of the systems and/or products set forth.

**Figure 9a** shows a computer readable medium 1000 having a writable part 1010, and a computer readable medium 1001 also having a writable part. Computer readable medium 1000 is shown in the form of an optically readable medium. Computer readable medium 1001 is shown in the form of an electronic memory, in this case a memory card. Computer readable medium 1000 and 1001 may store data 1020 wherein the data may indicate instructions, which when executed by a processor system, cause a processor system to perform an embodiment of a light modulator method, according to an embodiment. The computer program 1020 may be embodied on the computer readable medium 1000 as physical marks or by magnetization of the computer readable medium 1000. However, any other suitable embodiment is conceivable as well. Furthermore, it will be appreciated that, although the computer readable medium 1000 is shown here as an optical disc, the computer readable medium 1000 may be any suitable computer readable medium, such as a hard disk, solid state memory, flash memory, etc., and may be non-recordable or recordable. The computer program 1020 comprises instructions for causing a processor system to perform an embodiment of said light modulator method.

**Figure 9b** shows in a schematic representation of a processor system 1140 according to an embodiment of a light modulator and/or light modulator controller . The processor system comprises one or more integrated circuits 1110. The architecture of the one or more integrated circuits 1110 is schematically shown in Figure 9b. Circuit 1110 comprises a processing unit 1120, e.g., a CPU, for running computer program components to execute a method according to an embodiment and/or implement its modules or units. Circuit 1110 comprises a memory 1122 for storing programming code, data, etc. Part of memory 1122 may be read-only. Circuit 1110 may comprise a communication element 1126, e.g., an antenna, connectors, or both, and the like. Circuit 1110 may comprise a dedicated integrated circuit 1124 for performing part or all of the processing defined in the method. Processor 1120, memory 1122, dedicated IC 1124 and communication element 1126 may be connected to each other via an interconnect 1130, say a bus. The processor system 1140 may be arranged for contact and/or contactless communication, using an antenna and/or connectors, respectively.

For example, in an embodiment, processor system 1140, e.g., the light modulator and/or light modulator controller may comprise a processor circuit and a memory circuit, the processor being arranged to execute software stored in the memory circuit. For example, the processor circuit may be an Intel Core i7 processor, ARM Cortex-R8, etc. In an embodiment, the processor circuit may be ARM Cortex M0. The memory circuit may be an ROM circuit, or a non-volatile memory, e.g., a flash memory. The memory circuit may be a volatile memory, e.g., an SRAM memory. In the latter case, the device may comprise a non-volatile software interface, e.g., a hard drive, a network interface, etc., arranged for providing the software.

While system 1140 is shown as including one of each described component, the various components may be duplicated in various embodiments. For example, the processing unit 1120 may include multiple microprocessors that are configured to independently execute the methods described herein or are configured to perform steps or subroutines of the methods described herein such that the multiple processors cooperate to achieve the functionality described herein. Further, where the system 1140 is implemented in a cloud computing system, the various hardware components may belong to separate physical systems. For example, the processor 1120 may include a first processor in a first server and a second processor in a second server.

It should be noted that the above-mentioned embodiments illustrate rather than limit the presently disclosed subject matter, and that those skilled in the art will be able to design many alternative embodiments falling within the scope of the appended claims.

In the claims, any reference signs placed between parentheses shall not be construed as limiting the claim. Use of the verb 'comprise' and its conjugations does not exclude the presence of elements or steps other than those stated in a claim. The article 'a' or 'an' preceding an element does not exclude the presence of a plurality of such elements. Expressions such as "at least one of" when preceding a list of elements represent a selection of all or of any subset of elements from the list. For example, the expression, "at least one of A, B, and C" should be understood as including only A, only B, only C, both A and B, both A and C, both B and C, or all of A, B, and C. The presently disclosed subject matter may be implemented by hardware comprising several distinct elements, and by a suitably programmed computer. In the device claim enumerating several parts, several of these parts may be embodied by one and the same item of hardware. The mere fact that certain measures are recited in mutually different dependent claims does not indicate that a combination of these measures cannot be used to advantage.

In the claims references in parentheses refer to reference signs in drawings of exemplifying embodiments or to formulas of embodiments, thus increasing the intelligibility of the claim. These references shall not be construed as limiting the claim.

## Claims

1. A substrate (500) for a light modulator (10), the substrate comprising at least one electrode (52) extending across the substrate on a surface of the substrate, wherein
- the at least one electrode is adapted for an electric potential to be applied to the at least one electrode causing modulation of an electric field in an optical layer of the light modulator, providing electrophoretic and/or dielectrophoretic movement of particles in the optical layer, and
- the at least one electrode comprises a loop stretching across the surface, the substrate being arranged for the flow of an electrical current into and out of the loop to induce heating across the substrate, a series of conductive bridging lines (521, 522, 523) being arranged in the loop, each bridging line connecting from one point of the loop to another point of the loop, the series of bridging lines being arranged to create the electric field.

2. A light modulator (10) comprising
- a first substrate (11), and a second substrate (12) arranged opposite the first substrate, wherein the first substrate is according to Claim 1,
- an optical layer extending between the first and second substrate, the optical layer comprising a fluid (15) that comprises particles (30), wherein the light modulator is configured to apply an electric potential to the at least one electrode causing modulation of an electric field in the optical layer providing electrophoretic and/or dielectrophoretic movement of the particles in the optical layer causing modulation of light passing through the substrates.

3. The light modulator of Claim 2, wherein the light modulator is configured to accelerate dispersion of the particles in the fluid by heating across the substrate.

4. The light modulator of Claim 2 or Claim 3, configured to selectively cause an electrical current to flow through the loop and to establish an electric potential on the loop.

5. The light modulator of any one of Claims 2-4, wherein the loop comprises a first consecutive portion and a second consecutive portion, each of the bridging lines in the series extending between the first consecutive portion and the second consecutive portion.

6. The light modulator of any one of Claims 2-5, wherein the loop stretches along the periphery of the substrate, the bridging lines crossing across the substrate.

7. The light modulator of any one Claims 2-6, wherein the light modulator is configured to
- decrease transparency by flowing an electrical current through a loop of the at least one electrode on the first substrate, thereby increasing a temperature in the optical layer.

8. The light modulator of any one of Claims 2-7, further comprising at least one electrode on the second substrate, wherein the light modulator is further configured to apply an electric potential to the at least one electrode on the second substrate causing the modulation.

9. The light modulator of any one of Claims 2-8, wherein the at least one electrode extending across the first substrate comprises a first electrode and a second electrode, the first electrode comprising the loop and the series of conductive bridging lines, wherein
- the second electrode comprises a further loop and a further series of conductive bridging lines, and/or
- the second electrode comprises a series of connected extending lines,
wherein
the series of bridging lines of the first electrode interdigitate with the series of bridging lines and/or extending lines of the second electrode.

10. The light modulator of Claim 9, wherein a dielectric is arranged between the first electrode and the second electrode at a point where they cross on the substrate.

11. The light modulator of Claim 9 or Claim 10, wherein the light modulator is configured to decrease transparency by applying a horizontal drive to the at least one electrode on the first substrate, and by flowing an electrical current to flow through a loop of the at least one electrode on the first substrate, thereby increasing a temperature in the optical layer.

12. The light modulator according to any one of Claims 2-11, wherein the second substrate is according to Claim 1.

13. The light modulator of any one of Claims 2-12, wherein at least one electrode extends across the second substrate, on a surface of the second substrate facing the first substrate, the at least one electrode on the second substrate comprising a first electrode and a second electrode each comprising a series of bridging lines and/or extending lines that interdigitate with each other.

14. A light modulator as in any one of Claims 2-13, configured to apply DC and/or AC signals on the at least one electrode on at least the first substrate.

15. A light modulator as in any one of Claims 2-14, wherein the at least one electrode on at least the first substrate comprises linear segments, and/or curved segments.

16. A method (700) for a light modulator (10), the light modulator comprising
- a first substrate (11), and a second substrate (12) arranged opposite the first substrate, at least one electrode (52) extending across the first substrate, on a surface of the first substrate facing the second substrate, wherein the at least one electrode comprises a loop stretching across the surface, a series of conductive bridging lines (521, 522, 523) being arranged in the loop, each bridging line connecting from one point of the loop to another point of the loop,
- an optical layer extending between the first and second substrate, the optical layer comprising a fluid (15) that comprises particles (30),
the method comprising
- applying (710) an electric potential to the at least one electrode causing modulation of an electric field in the optical layer providing electrophoretic and/or dielectrophoretic movement of the particles in the optical layer causing modulation of light passing through the substrates,
- inducing heating across the first substrate, by applying (720) an electrical current into and out of the loop.

17. A transitory or non-transitory computer storage medium (1000, 1001) encoded with instructions that, when executed by one or more computers, cause the one or more computers to perform the method according to Claim 16.

## Patentansprüche

1. Substrat (500) für einen Lichtmodulator (10), wobei das Substrat mindestens eine Elektrode (52) umfasst, die sich auf einer Oberfläche des Substrats über das ganze Substrat verteilt erstreckt, wobei:
- die mindestens eine Elektrode dazu geeignet ist, dass ein elektrisches Potential an die mindestens eine Elektrode angelegt wird, was eine Modulation eines elektrischen Feldes in einer optischen Schicht des Lichtmodulators verursacht, wodurch eine elektrophoretische und/oder eine dielektrophoretische Bewegung von Partikeln in der optischen Schicht bereitgestellt wird, und
- die mindestens eine Elektrode eine Schleife umfasst, die über die ganze Oberfläche verteilt ausgedehnt ist, wobei das Substrat für den Fluss eines elektrischen Stroms in die und aus der Schleife angeordnet ist, um über das ganze Substrat verteilt eine Erwärmung zu induzieren, wobei in der Schleife eine Reihe von leitfähigen Überbrückungsleitungen (521, 522, 523) angeordnet ist, wobei jede Überbrückungsleitung einen Punkt der Schleife mit einem anderen Punkt der Schleife verbindet, wobei die Reihe von Überbrückungsleitungen angeordnet ist, um das elektrische Feld zu erzeugen.

2. Lichtmodulator (10), umfassend:
- ein erstes Substrat (11) und ein zweites Substrat (12), das gegenüber dem ersten Substrat angeordnet ist, wobei das erste Substrat ein Substrat nach Anspruch 1 ist,
- eine optische Schicht, die sich zwischen dem ersten und dem zweiten Substrat erstreckt, wobei die optische Schicht ein Fluid (15) umfasst, das Partikel (30) umfasst, wobei der Lichtmodulator konfiguriert ist, um ein elektrisches Potential an die mindestens eine Elektrode anzulegen, was eine Modulation eines elektrischen Feldes in der optischen Schicht bewirkt, wodurch eine elektrophoretische und/oder eine dielektrophoretische Bewegung der Partikel in der optischen Schicht bereitgestellt wird, die eine Modulation eines Lichts verursacht, das die Substrate durchquert.

3. Lichtmodulator nach Anspruch 2, wobei der Lichtmodulator konfiguriert ist, um eine Dispersion der Partikel in dem Fluid durch ein über das ganze Substrat verteiltes Erwärmen zu beschleunigen.

4. Lichtmodulator nach Anspruch 2 oder Anspruch 3, der konfiguriert ist, um selektiv zu verursachen, dass ein elektrischer Strom durch die Schleife fließt und ein elektrisches Potential an der Schleife aufgebaut wird.

5. Lichtmodulator nach einem der Ansprüche 2 bis 4, wobei die Schleife einen ersten fortlaufenden Abschnitt und einen zweiten fortlaufenden Abschnitt umfasst, wobei sich jede der Überbrückungsleitungen in der Reihe zwischen dem ersten fortlaufenden Abschnitt und dem zweiten fortlaufenden Abschnitt erstreckt.

6. Lichtmodulator nach einem der Ansprüche 2 bis 5, wobei sich die Schleife entlang der Peripherie des Substrats ausdehnt, wobei sich die Überbrückungsleitungen über das ganze Substrat verteilt kreuzen.

7. Lichtmodulator nach einem der Ansprüche 2 bis 6, wobei der Lichtmodulator konfiguriert ist zum
- Verringern der Transparenz, indem er einen elektrischen Strom durch eine Schleife der mindestens einen Elektrode auf dem ersten Substrat fließen lässt, wodurch eine Temperatur in der optischen Schicht ansteigt.

8. Lichtmodulator nach einem der Ansprüche 2 bis 7, der ferner mindestens eine Elektrode auf dem zweiten Substrat umfasst, wobei der Lichtmodulator ferner konfiguriert ist, um ein elektrisches Potential an die mindestens eine Elektrode auf dem zweiten Substrat anzulegen, wodurch die Modulation verursacht wird.

9. Lichtmodulator nach einem der Ansprüche 2 bis 8, wobei die mindestens eine Elektrode, die sich über das ganze erste Substrat verteilt erstreckt, eine erste Elektrode und eine zweite Elektrode umfasst, wobei die erste Elektrode die Schleife und die Reihe von leitfähigen Überbrückungsleitungen umfasst, wobei:
- die zweite Elektrode eine weitere Schleife und eine weitere Reihe von leitenden Überbrückungsleitungen umfasst, und/oder
- die zweite Elektrode eine Reihe von angeschlossenen Verlängerungsleitungen umfasst, wobei
die Reihe von Überbrückungsleitungen der ersten Elektrode mit der Reihe von Überbrückungsleitungen und/oder Verlängerungsleitungen der zweiten Elektrode ineinandergreift.

10. Lichtmodulator nach Anspruch 9, wobei ein Dielektrikum zwischen der ersten Elektrode und der zweiten Elektrode an einem Punkt angeordnet ist, an dem sie sich auf dem Substrat kreuzen.

11. Lichtmodulator nach Anspruch 9 oder Anspruch 10, wobei der Lichtmodulator konfiguriert ist, um die Transparenz zu verringern, indem er eine horizontale Ansteuerung an die mindestens eine Elektrode auf dem ersten Substrat anlegt und indem er einen elektrischen Strom so fließen lässt, dass er durch eine Schleife der mindestens einen Elektrode auf dem ersten Substrat fließt, wodurch eine Temperatur in der optischen Schicht ansteigt.

12. Lichtmodulator nach einem der Ansprüche 2 bis 11, wobei das zweite Substrat ein Substrat nach Anspruch 1 ist.

13. Lichtmodulator nach einem der Ansprüche 2 bis 12, wobei sich mindestens eine Elektrode auf einer Oberfläche des zweiten Substrats über das ganze zweite Substrat verteilt erstreckt, die dem ersten Substrat zugewandt ist, wobei die mindestens eine Elektrode auf dem zweiten Substrat eine erste Elektrode und eine zweite Elektrode umfasst, die jeweils eine Reihe von Überbrückungsleitungen und/oder Verlängerungsleitungen umfassen, die ineinandergreifen.

14. Lichtmodulator nach einem der Ansprüche 2 bis 13, der konfiguriert ist, um DC- und/oder AC-Signale an die mindestens eine Elektrode auf mindestens dem ersten Substrat anzulegen.

15. Lichtmodulator nach einem der Ansprüche 2 bis 14, wobei die mindestens eine Elektrode auf mindestens dem ersten Substrat lineare Segmente und/oder gekrümmte Segmente umfasst.

16. Verfahren (700) für einen Lichtmodulator (10), wobei der Lichtmodulator umfasst:
- ein erstes Substrat (11) und ein zweites Substrat (12), das gegenüber dem ersten Substrat angeordnet ist, wobei sich mindestens eine Elektrode (52) auf einer Oberfläche des ersten Substrats über das ganze erste Substrat verteilt erstreckt, die dem zweiten Substrat zugewandt ist, wobei die mindestens eine Elektrode eine Schleife umfasst, die sich auf die ganze Oberfläche verteilt ausdehnt, wobei eine Reihe von leitfähigen Überbrückungsleitungen (521, 522, 523) in der Schleife angeordnet ist, wobei jede Überbrückungsleitung einen Punkt der Schleife mit einem anderen Punkt der Schleife verbindet,
- eine optische Schicht, die sich zwischen dem ersten und dem zweiten Substrat erstreckt, wobei die optische Schicht ein Fluid (15) umfasst, das Partikel (30) umfasst,
wobei das Verfahren umfasst:
- Anlegen (710) eines elektrischen Potentials an die mindestens eine Elektrode, was eine Modulation eines elektrischen Feldes in der optischen Schicht bewirkt, wodurch eine elektrophoretische und/oder eine dielektrophoretische Bewegung der Partikel in der optischen Schicht bereitgestellt wird, die eine Modulation von Licht verursacht, das die Substrate durchquert,
- Induzieren einer Erwärmung verteilt über das ganze erste Substrat durch ein Anlegen (720) eines elektrischen Stroms in die und aus der Schleife.

17. Transitorisches oder nicht-transitorisches Computerspeichermedium (1000, 1001), in dem Anweisungen codiert sind, die, wenn sie von einem oder mehreren Computern ausgeführt werden, den einen oder die mehreren Computer veranlassen, das Verfahren nach Anspruch 16 durchzuführen.

## Revendications

1. Substrat (500) pour un modulateur de lumière (10), le substrat comprenant au moins une électrode (52) s'étendant d'un bout à l'autre du substrat sur une surface du substrat, dans lequel
- l'au moins une électrode est adaptée pour que soit appliqué à l'au moins une électrode un potentiel électrique provoquant la modulation d'un champ électrique dans une couche optique du modulateur de lumière, ce qui produit un mouvement électrophorétique et/ou diélectrophorétique de particules dans la couche optique, et
- l'au moins une électrode comprend une boucle s'étendant d'un bout à l'autre de la surface, le substrat étant agencé pour la circulation d'un courant électrique vers l'intérieur et vers l'extérieur de la boucle afin d'induire un chauffage d'un bout à l'autre du substrat, une série de lignes de pontage conductrices (521, 522, 523) étant disposée dans la boucle, chaque ligne de pontage connectant un point de la boucle à un autre point de la boucle, la série de lignes de pontage étant agencée pour créer le champ électrique.

2. Modulateur de lumière (10) comprenant
- un premier substrat (11), et un deuxième substrat (12) disposé en regard du premier substrat, le premier substrat étant selon la revendication 1,
- une couche optique s'étendant entre le premier et le deuxième substrat, la couche optique comprenant un fluide (15) qui comprend des particules (30), le modulateur de lumière étant conçu pour appliquer à l'au moins une électrode un potentiel électrique provoquant la modulation d'un champ électrique dans la couche optique, ce qui produit un mouvement électrophorétique et/ou diélectrophorétique des particules dans la couche optique provoquant la modulation de la lumière traversant les substrats.

3. Modulateur de lumière de la revendication 2, le modulateur de lumière étant conçu pour accélérer la dispersion des particules dans le fluide par chauffage d'un bout à l'autre du substrat.

4. Modulateur de lumière de la revendication 2 ou la revendication 3, conçu pour provoquer sélectivement la circulation d'un courant électrique à travers la boucle et pour établir un potentiel électrique sur la boucle.

5. Modulateur de lumière de l'une quelconque des revendications 2 à 4, dans lequel la boucle comprend une première partie consécutive et une deuxième partie consécutive, chacune des lignes de pontage dans la série s'étendant entre la première partie consécutive et la deuxième partie consécutive.

6. Modulateur de lumière de l'une quelconque des revendications 2 à 5, dans lequel la boucle s'étend le long de la périphérie du substrat, les lignes de pontage traversant le substrat.

7. Modulateur de lumière de l'une quelconque des revendications 2 à 6, le modulateur de lumière étant conçu pour
- réduire la transparence en faisant circuler un courant électrique à travers une boucle de l'au moins une électrode sur le premier substrat, ce qui fait monter une température dans la couche optique.

8. Modulateur de lumière de l'une quelconque des revendications 2 à 7, comprenant en outre au moins une électrode sur le deuxième substrat, le modulateur de lumière étant en outre conçu pour appliquer à l'au moins une électrode sur le deuxième substrat un potentiel électrique provoquant la modulation.

9. Modulateur de lumière de l'une quelconque des revendications 2 à 8, dans lequel l'au moins une électrode s'étendant d'un bout à l'autre du premier substrat comprend une première électrode et une deuxième électrode, la première électrode comprenant la boucle et la série de lignes de pontage conductrices, dans lequel
- la deuxième électrode comprend une autre boucle et une autre série de lignes de pontage conductrices, et/ou
- la deuxième électrode comprend une série de lignes de prolongement connectées, dans lequel
les lignes de la série de lignes de pontage de la première électrode s'imbriquent avec les lignes de la série de lignes de pontage et/ou de lignes de prolongement de la deuxième électrode.

10. Modulateur de lumière de la revendication 9, dans lequel un diélectrique est disposé entre la première électrode et la deuxième électrode en un point où elles se croisent sur le substrat.

11. Modulateur de lumière de la revendication 9 ou la revendication 10, le modulateur de lumière étant conçu pour réduire la transparence en appliquant une commande horizontale à l'au moins une électrode sur le premier substrat, et en faisant circuler un courant électrique pour qu'il circule à travers une boucle de l'au moins une électrode sur le premier substrat, ce qui fait monter une température dans la couche optique.

12. Modulateur de lumière selon l'une quelconque des revendications 2 à 11, dans lequel le deuxième substrat est selon la revendication 1.

13. Modulateur de lumière de l'une quelconque des revendications 2 à 12, dans lequel au moins une électrode s'étend d'un bout à l'autre du deuxième substrat, sur une surface du deuxième substrat faisant face au premier substrat, l'au moins une électrode sur le deuxième substrat comprenant une première électrode et une deuxième électrode comprenant chacune une série de lignes de pontage et/ou de lignes de prolongement qui s'imbriquent les unes avec les autres.

14. Modulateur de lumière selon l'une quelconque des revendications 2 à 13, conçu pour appliquer des signaux CC et/ou CA à l'au moins une électrode au moins sur le premier substrat.

15. Modulateur de lumière selon l'une quelconque des revendications 2 à 14, dans lequel l'au moins une électrode au moins sur le premier substrat comprend des segments linéaires et/ou des segments courbes.

16. Procédé (700) pour un modulateur de lumière (10), le modulateur de lumière comprenant
- un premier substrat (11), et un deuxième substrat (12) disposé en regard du premier substrat, au moins une électrode (52) s'étendant d'un bout à l'autre du premier substrat, sur une surface du premier substrat faisant face au deuxième substrat, l'au moins une électrode comprenant une boucle s'étendant d'un bout à l'autre de la surface, une série de lignes de pontage (521, 522, 523) conductrices étant disposée dans la boucle, chaque ligne de pontage connectant un point de la boucle à un autre point de la boucle,
- une couche optique s'étendant entre le premier et le deuxième substrat, la couche optique comprenant un fluide (15) qui comprend des particules (30),
le procédé comprenant
- l'application (710) à l'au moins une électrode d'un potentiel électrique provoquant la modulation d'un champ électrique dans la couche optique, ce qui produit un mouvement électrophorétique et/ou diélectrophorétique des particules dans la couche optique provoquant la modulation de la lumière traversant les substrats,
- l'induction d'un chauffage d'un bout à l'autre du premier substrat, par application (720) d'un courant électrique vers l'intérieur et vers l'extérieur de la boucle.

17. Support de stockage informatique transitoire ou non transitoire (1000, 1001) codé avec des instructions qui, lors de leur exécution par un ou plusieurs ordinateurs, amènent le ou les ordinateurs à effectuer le procédé selon la revendication 16.
